# EUROPÄISCHE PATENTSCHRIFT

(11) **EP 3 489 549 B1**
(45) Veröffentlichungstag und Bekanntmachung des Hinweises auf die Patenterteilung: **05.01.2022**
(21) Anmeldenummer: 18206995.5
(22) Anmeldetag: 19.11.2018
(51) Int. Cl.: F16H 57/08, F16H 1/28, F16H 57/04, F02C 7/36

(54) **PLANETENGETRIEBE UND GLEITLAGERSTIFT FÜR EIN PLANETENGETRIEBE**
PLANETARY GEAR AND JOURNAL BEARING PIN FOR A PLANETARY GEAR
TRAIN ÉPICYCLOÏDAL ET BROCHE À PALIER LISSE POUR UN TRAIN ÉPICYCLOÏDAL

(30) Priorität: 24.11.2017 DE 102017127866; 24.11.2017 DE 102017127876; 24.11.2017 DE 102017127874
(43) Veröffentlichungstag der Anmeldung: 29.05.2019
(73) Patentinhaber: Rolls-Royce Deutschland Ltd & Co KG, 15827 Blankenfelde-Mahlow (DE); Rolls-Royce plc, London N1 9FX (GB)
(72) Erfinder: NIQUE, Michael, 15827 Blankenfelde-Mahlow (DE); SPRUCE, Mark, Derby, Derbyshire DE24 8BJ (GB); GORENZ, Paul, 15827 Blankenfelde-Mahlow (DE); ASHMORE, Dr. Daren, Derby, Derbyshire DE24 8BJ (GB); CAMPBELL, Christopher, 15827 Blankenfelde-Mahlow (DE); WAGNER, Frank, 15827 Blankenfelde-Mahlow (DE)
(74) Vertreter: Müller, Wolfram Hubertus

(56) Entgegenhaltungen:
- EP-A1- 1 649 191
- CN-Y- 201 396 406
- DD-A5- 289 318
- US-A1- 2004 192 491

## Beschreibung

Die Erfindung betrifft ein Planetengetriebe gemäß dem Oberbegriff des Patentanspruchs 1 und einen Gleitlagerstift für ein solches Planetengetriebe.

Planetengetriebe sind allgemein bekannt. Sie werden unter anderem in Getriebefan-Triebwerken eingesetzt, um eine Untersetzung zwischen einer mit einer Turbine gekoppelten Turbinenwelle und einer mit einem Fan gekoppelten Fanwelle bereitzustellen.

Die US 2015/0300255 A1 beschreibt ein Planetengetriebe eines Getriebefan-Triebwerks, bei dem in Planetenrädern, die von einem Sonnenrad angetrieben werden und in einem feststehenden Hohlrad umlaufen, jeweils zylindrische Planeten-Gleitlagerstifte angeordnet sind, die ein geschmiertes Gleitlager zum Planetenrad bilden. Die Planeten-Gleitlagerstifte sind mit einem Drehmomentträger verbunden, der mit einer Fanwelle gekoppelt ist.

In Getriebefan-Triebwerken sind Planetengetriebe sehr großen Zentrifugalkräften und Drehmomenten ausgesetzt, die den Planeten-Gleitlagerstift und das Planetenrad verformen und den Schmierfilm im Gleitlager zwischen diesen beiden Elementen beeinflussen können, wodurch die Funktionalität des Gleitlagers beeinträchtigt wird. Insbesondere verhält es sich so, dass der zylindrische und an seinen Enden in Trägerplatten fixierte Planeten-Gleitlagerstift durch die auftretenden Kräfte Biegungen ausgesetzt ist, durch die die Schmierfilmdicke in der Mitte des Planeten-Gleitlagerstifts zunimmt und an den Enden des Planeten-Gleitlagerstifts abnimmt, was an den Enden des Planeten-Gleitlagerstifts zu einem erhöhten Schmierfilmdruck und der Gefahr eines Metall-Metall-Kontaktes zwischen dem Planeten-Gleitlagerstift und dem Planetenrad führt. Eine starke Belastung und Abnutzung des Planeten-Gleitlagerstifts an seinen Enden sind die Folge.

Durch eine verbesserte Steifigkeit des Planeten-Gleitlagerstifts könnten dessen Belastungen und Abnutzungen reduziert werden. Die hierfür erforderliche Vergrößerung der Wanddicke des Planeten-Gleitlagerstifts führt jedoch zu einer Gewichtszunahme, die bei Luftfahrtanwendungen nachteilig ist.

Die DD 289 318 A5 offenbart ein gattungsgemäßes Planetengetriebe, das Planeten-Gleitlagerstifte aufweist, die an ihrer Außenseite jeweils eine Balligkeit ausbilden. Eine axiale Bohrung der Planeten-Gleitlagerstifte ist an ihren beiden axialen Enden vergrößert.

Der vorliegenden Erfindung liegt die Aufgabe zu Grunde, ein Planetengetriebe mit einem verbesserten Planeten-Gleitlagerstift bereitzustellen.

Diese Aufgabe wird durch ein Planetengetriebe mit den Merkmalen des Patentanspruchs 1 gelöst. Ausgestaltungen der Erfindung sind in den abhängigen Ansprüchen angegeben.

Danach betrachtet die Erfindung ein Planetengetriebe, das ein Sonnenrad, eine Mehrzahl von Planetenrädern, ein Hohlrad und eine Mehrzahl von Planeten-Gleitlagerstiften umfasst. Das Sonnenrad rotiert um eine Drehachse des Planetengetriebes und wird von einer Sonnenwelle angetrieben. Die Drehachse des Planetengetriebes definiert eine axiale Richtung des Planetengetriebes. Die Planetenräder werden von dem Sonnenrad angetrieben und stehen mit dem Hohlrad in Eingriff. Es ist jeweils ein Planeten-Gleitlagerstift in einem Planetenrad angeordnet, wobei der Planeten-Gleitlagerstift und das Planetenrad ein geschmiertes Gleitlager bilden, bei dem die aneinander angrenzende Kontaktflächen des Gleitlagers durch einen Gleitlagerspalt voneinander getrennt sind. Der Planeten-Gleitlagerstift weist eine außenseitige Anlagefläche auf, die ein axial vorderes Ende und ein axial hinteres Ende aufweist. Der Planeten-Gleitlagerstift ist des Weiteren mit einer axialen Bohrung versehen und weist eine Innenfläche auf, die ein axial vorderes Ende und ein axial hinteres Ende aufweist.

Die vorliegende Erfindung sieht vor, dass der Innendurchmesser der axialen Bohrung des Planeten-Gleitlagerstifts zwischen dem axial vorderen Ende und dem axial hinteren Ende der Innenfläche variiert und dabei an mindestens einem axialen Ende ein Maximum aufweist, und dass die Planeten-Gleitlagerstifte an ihrer Anlagefläche jeweils eine Balligkeit in dem Sinne ausbilden, dass ihr Außendurchmesser von einem maximalen Au βendurchmesser zu mindestens einem axialen Ende der Anlagefläche hin abnimmt und an dem axialen Ende ein Minimum aufweist. Die mit einer Balligkeit ausgebildete Anlagefläche des Planeten-Gleitlagerstifts bildet dabei eine Kontaktfläche des Gleitlagers, das der Planeten-Gleitlagerstift mit dem Planetenrad bildet.

Die vorliegende Erfindung sieht weiter vor, dass der Planeten-Gleitlagerstift ein axial vorderes Ende und ein axial hinteres Ende aufweist, die axial beabstandet zu dem axial vorderen Ende und dem axial hinteren Ende der Innenfläche sind, wobei der Planeten-Gleitlagerstift an seinem vorderen axialen Ende mit einer vorderen Trägerplatte und an seinem hinteren axialen Ende mit einer hinteren Trägerplatte verbunden ist. Der Planeten-Gleitlagerstift erstreckt sich somit an beiden Enden jenseits der Innenfläche und ist dort jeweils mit einer Trägerplatte verbunden. Es ist also zu unterscheiden zwischen den axialen Enden der Innenfläche und den axialen Enden des Planeten-Gleitlagerstifts.

Die erfindungsgemäße Lösung beruht zum einen auf der Idee, den Planeten-Gleitlagerstift im Bereich der axialen Bohrung nicht zylindrisch auszubilden, sondern mit einem sich in axialer Richtung verändernden Innendurchmesser zu versehen, wobei der Innendurchmesser an mindestens einem axialen Ende der Innenfläche ein Maximum aufweist. Dementsprechend weist der Planeten-Gleitlagerstift entlang seiner axialen Erstreckung eine Änderung seiner Wanddicke auf, die durch den sich ändernden Durchmesser der axialen Bohrung verursacht ist. Dabei ist die Wanddicke des Planeten-Gleitlagerstifts an mindestens einem axialen Ende der Innenfläche minimal (entsprechend einem maximalen Innendurchmesser der axialen Bohrung). In Ausgestaltungen der Erfindung ist die Wanddicke des Planeten-Gleitlagerstifts an beiden axialen Enden der Innenfläche minimal. Zwischen den axialen Enden weist der Planeten-Gleitlagerstift eine maximale Wanddicke auf (entsprechend einem minimalen Innendurchmesser der axialen Bohrung).

Es wird eine Struktur bereitgestellt, bei der der Planeten-Gleitlagerstift mittig eine größere Wandstärke aufweist als an seinen axialen Enden (oder als an zumindest einem seiner axialen Enden), wodurch die Steifigkeit des Planeten-Gleitlagerstifts erhöht und dementsprechend Belastungen und Abnutzungen reduziert werden. Durch die reduzierte Wanddicke zu den axialen Enden hin ist der Planeten-Gleitlagerstift an seinen axialen Enden darüber hinaus im Betrieb leichter verformbar, so dass sich unter Last der Planeten-Gleitlagerstift besser an das Planetenrad anschmiegen und ein gleichmäßiger Gleitlagerspalt über die axiale Länge des Gleitlagers entstehen kann.

Die erfindungsgemäße Lösung beruht zum anderen auf der Idee, den Planeten-Gleitlagerstift außenseitig nicht zylindrisch auszubilden, sondern mit einer Balligkeit zu versehen, die dazu führt, dass der Außendurchmesser des Planeten-Gleitlagerstifts an mindestens einem axialen Ende der Anlagefläche minimal ist. Hierdurch wird an mindestens einem Ende der Anlagefläche ein vergrößerter Gleitlagerspalt und damit einhergehend eine vergrößerte Schmierfilmdicke bereitgestellt. Dies führt dazu, dass bei im Betrieb auftretenden Deformationen und Schwingungen an den Enden der Anlagefläche, die auf Zentrifugalkräfte und eingeleitete Drehmomente zurückzuführen sind, die Schmierfilmdicke an mindestens einem axialen Ende der Anlagefläche ausreichend groß bleibt, um einen überhöhten Schmierfilmdruck und die Gefahr eines Metall-Metall-Kontaktes zwischen dem Planeten-Gleitlagerstift und dem Planetenrad zu vermeiden.

Das Gleitlager wird insofern optimiert, als auch an den axialen Enden des Gleitlagers im Betrieb parallel ausgerichtete Kontaktflächen bereitgestellt werden. Die Schmierfilmdicke weist geringere Dickenänderungen über die axiale Länge auf. Die genannten Vorteile werden dabei ohne eine Erhöhung der Wanddicke des Planeten-Gleitlagerstifts erreicht. Vielmehr kann sogar eine gewisse Gewichtsersparnis erreicht werden, da die Balligkeit der Anlagefläche durch eine Materialentfernung zu den axialen Enden der Anlagefläche hin erreicht werden kann.

Durch die Kombination eines sich in axialer Richtung verändernden Innendurchmessers mit einer Balligkeit des Planeten-Gleitlagerstifts wird erreicht, dass einerseits der Planeten-Gleitlagerstift gewichtsarm ausgebildet werden kann, wobei die Lagerbelastung verringert wird, und andererseits im Betrieb an seinen axialen Enden leicht verformbar ist, so dass sich unter Last der Planeten-Gleitlagerstift besser an das Planetenrad anschmiegen und ein gleichmäßiger Gleitlagerspalt mit parallel ausgerichteten Kontaktflächen über die axiale Länge des Gleitlagers entstehen kann.

Eine Ausgestaltung der Erfindung sieht vor, dass der Planeten-Gleitlagerstift innenseitig derart geformt ist, dass der maximale Innendurchmesser an beiden axialen Enden der Innenfläche und einen minimalen Innendurchmesser zwischen den axialen Enden aufweist, wobei die maximalen Innendurchmesser an den beiden axialen Enden identisch oder unterschiedlich sein können. Der Innendurchmesser ist gemäß dieser Ausführungsvariante somit an beiden axialen Enden maximal. In einer alternativen Ausgestaltung ist der Innendurchmesser an dem einen axialen Ende der Innenfläche minimal, wobei sich der Innendurchmesser zu dem anderen axialen Ende hin kontinuierlich bis zu einem Maximum vergrößert.

Weiter kann vorgesehen sein, dass der Innendurchmesser der axialen Bohrung des Planeten-Gleitlagerstifts zu mindestens einem axialen Ende der Innenfläche stetig zunimmt, wobei der maximale Innendurchmesser erst an der axialen Position des jeweiligen axialen Endes der Innenfläche erreicht ist.

Eine weitere Ausgestaltung der Erfindung sieht vor, dass die Innenfläche des Planeten-Gleitlagerstifts im Längsschnitt eine erste Kurve ausbildet, die sich zwischen dem Minimum und dem vorderen axialen Ende erstreckt, und eine zweite Kurve ausbildet, die sich zwischen dem Minimum und dem hinteren axialen Ende erstreckt. Dabei können die erste und die zweite Kurve grundsätzlich in beliebiger Weise geformt sein. Ausführungsbeispiele sehen vor, dass die erste Kurve und/oder die zweite Kurve als Kreisbogen ausgebildet ist, dass die erste Kurve und/oder die zweite Kurve parabelförmig ausgebildet ist, oder dass die erste Kurve und/oder die zweite Kurve geradlinig ausgebildet ist oder geradlinig ausgebildete Kurvenstücke aufweist. Auch kann vorgesehen sein, dass die erste Kurve und/oder die zweite Kurve aus mehreren unterschiedlich gekrümmten Kurvenstücken zusammengesetzt ist. Dabei kann weiter vorgesehen sein, dass eines oder mehrere dieser Kurvenstücke geradlinig/linear ausgebildet sind.

Sofern die erste Kurve und die zweite Kurve geradlinig ausgebildet sind, ist die axiale Bohrung gemäß einer Ausführungsvariante als doppelt konische Bohrung ausgebildet, die sich jeweils von den axialen Enden zur axialen Mitte der Bohrung hin konisch verjüngt. Sofern die erste Kurve und die zweite Kurve geradlinig ausgebildete Kurvenstücke aufweist, so umfasst die axiale Bohrung gemäß einer Ausführungsvariante eine doppelt konische Bohrung, die sich jeweils von den axialen Enden zur axialen Mitte der Bohrung hin konisch verjüngt, und die dann durch eine abgerundete Kurve beispielsweise in einen zylindrischen Bereich konstanten Innendurchmessers übergeht.

Das Minimum des Innendurchmessers des Planeten-Gleitlagerstifts wird in einer Ausgestaltung der Erfindung durch eine Umfangslinie gebildet (die sich in Umfangsrichtung des Planeten-Gleitlagerstifts an der Innenfläche erstreckt). Im Längsschnitt des Planeten-Gleitlagerstifts bildet das Minimum somit einen Punkt. Dies bedeutet, dass die genannte erste Kurve und die genannte zweite Kurve unmittelbar ineinander übergehen, somit die Innenfläche durch eine einzige gekrümmte Kurve gebildet sein kann (die ins Ausführungsvarianten aus unterschiedlich gekrümmten Kurvenstücken zusammengesetzt sein kann). Dementsprechend kann vorgesehen sein, dass die Innenfläche des Planeten-Gleitlagerstifts vollständig kreisförmig oder parabelförmig mit einem Minimum des Innendurchmessers in der axialen Mitte des Planeten-Gleitlagerstifts oder alternativ außerhalb der axialen Mitte des Planeten-Gleitlagerstifts ausgebildet ist.

Eine alternative Ausgestaltung der Erfindung sieht vor, dass das Minimum des Innendurchmessers des Planeten-Gleitlagerstifts durch einen zylindrischen Bereich konstanten Innendurchmessers gebildet ist, der sich über eine definierte axiale Länge erstreckt. Diese axiale Länge kann derart bemessen sein, dass das Verhältnis der axialen Länge des zylindrischen Bereichs zur axialen Gesamtlänge der Anlagefläche zwischen 0 und 0,75 liegt.

Ein solcher zylindrischer Plateaubereich kann dabei mittig oder außermittig ausgebildet sein. An ihn können sich beispielsweise im Längsschnitt kreisförmige, parabelförmige oder gradlinige Flächen anschließen.

Es kann vorgesehen sein, dass der Planeten-Gleitlagerstift in seiner axialen Mitte (d.h. mittig zwischen dem axial vorderen Ende und dem axial hinteren Ende der Innenfläche) ein Minimum seines Innendurchmessers aufweist. Der Planeten-Gleitlagerstift ist spiegelsymmetrisch hinsichtlich seiner axialen Mitte ausgebildet. Dies ist jedoch nicht notwendigerweise der Fall. Alternative Varianten der Erfindung sehen vor, dass der Planeten-Gleitlagerstift außerhalb seiner axialen Mitte ein Minimum seines Innendurchmessers aufweist und dementsprechend asymmetrisch hinsichtlich seiner axialen Mitte ausgebildet ist.

Eine weitere Ausgestaltung der Erfindung sieht vor, dass das Verhältnis zwischen dem minimalen Innendurchmesser und dem oder den maximalen Innendurchmessern zwischen 0 und 0,99 liegt. Wenn das Verhältnis 0 ist, ist der minimale Innendurchmesser gleiche 0, d.h. die axiale Bohrung des Planeten-Gleitlagerstifts ist nicht durchgehend ausgebildet, sondern an mindestens einem axialen Punkt verschlossen.

Es kann vorgesehen sein, dass der Planeten-Gleitlagerstift als Rotationskörper ausgebildet ist, d. h. er ist rotationssymmetrisch bezüglich der Längsachse des Gleitlagerstifts ausgebildet.

Gemäß einer Ausgestaltung der Erfindung sind die Planeten-Gleitlagerstifte mit einem Drehmomentträger gekoppelt, wobei der Drehmomentträger bei drehendem Sonnenrad und fest angeordnetem Hohlrad mit untersetzter Drehzahl um die Drehachse des Planetengetriebes rotiert. Der Drehmomentträger ist dabei beispielsweise mit einer Fanwelle gekoppelt. Die Planetenräder rotieren sowohl um ihre eigene Achse als auch um die Drehachse des Planetengetriebes, dies jeweils mit unterschiedlichen Drehzahlen.

Eine Ausgestaltung der Erfindung sieht dabei vor, dass die Planeten-Gleitlagerstifte dazu ausgebildet sind, in ihrer axialen Bohrung einen Trägerstift des Drehmomentträgers aufzunehmen, wobei über den Trägerstift eine Drehmomentübertragung erfolgt.

Alternativ kann vorgesehen sein, dass die Planeten-Gleitlagerstifte fest mit einer vorderen Trägerplatte und mit einer hinteren Trägerplatte verbunden sind, wobei die vordere Trägerplatte zur Drehmomentübertragung mit dem Drehmomentträger gekoppelt ist. Die Planeten-Gleitlagerstifte können mit den Trägerplatten dabei beispielsweise verschweißt oder verschraubt sein.

Zu dem Erfindungsaspekt, dass der Planeten-Gleitlagerstift an seiner Außenseite eine Balligkeit ausbildet, können folgende Ausführungsvarianten vorgesehen sein.

Eine Ausgestaltung sieht vor, dass die Planeten-Gleitlagerstifte an ihrer Anlagefläche eine Balligkeit dahingehend ausbilden, dass ihr Außendurchmesser zu beiden axialen Enden der Anlagefläche hin abnimmt und an beiden axialen Enden ein Minimum aufweist. Insbesondere kann vorgesehen sein, dass der Planeten-Gleitlagerstift minimale Außendurchmesser an den beiden axialen Enden der Anlagefläche und den maximalen Außendurchmesser zwischen den axialen Enden aufweist, wobei die minimalen Außendurchmesser an den beiden Enden identisch oder unterschiedlich sein können. Dabei definiert die Differenz zwischen dem maximalen Außendurchmesser und dem minimalen Außendurchmesser an dem einen Ende der Anlagefläche die Balligkeit zwischen dem maximalen Außendurchmesser und dem einen Ende. Des Weiteren definiert die Differenz zwischen dem maximalen Außendurchmesser und dem minimalen Außendurchmesser an dem anderen Ende der Anlagefläche die Balligkeit zwischen dem maximalen Außendurchmesser und dem anderen Ende.

Der Außendurchmesser ist gemäß dieser Ausführungsvariante somit an beiden axialen Enden minimal, d. h. er nimmt zu beiden axialen Enden ab. Damit ist gerade nicht vorgesehen, dass der Außendurchmesser angrenzend an die axialen Enden konstant verläuft, für welchen Fall die axialen Enden zylindrisch ausgebildet wären. Gemäß einer alternativen Ausgestaltung weist der Außendurchmesser an dem einen axialen Ende der Anlagefläche einen maximalen Außendurchmesser auf, wobei sich der Außendurchmesser zu dem anderen axialen Ende hin kontinuierlich bis zu einem Minimum verringert.

Dementsprechend kann vorgesehen sein, dass die Differenz zwischen dem maximalen Außendurchmesser und dem Außendurchmesser an einer betrachteten axialen Position des Planeten-Gleitlagerstifts zu beiden axialen Enden oder zu einem axialen Ende des Planeten-Gleitlagerstifts kontinuierlich zunimmt. Dies bedeutet für den Gleitlagerspalt, dass dieser - bei einer Betrachtung des Zusammenbauzustands ohne Last und im nichtrotierenden Zustand - ebenfalls zu den axialen Enden des Planeten-Gleitlagerstifts zunimmt. Dabei wird angenommen, dass die Kontaktfläche des Planetenrads, die die andere Fläche des Gleitlagers bildet, zylindrisch ausgebildet ist. Im Betrieb bzw. unter Last schmiegt sich das Planetenrad dagegen an den Planeten-Gleitlagerstift, so dass ein gleichmäßiger Spalt über die axiale Länge entsteht.

Es kann vorgesehen sein, dass die Anlagefläche des Planeten-Gleitlagerstifts im Längsschnitt eine erste konvexe Kurve ausbildet, die sich zwischen dem Maximum des Außendurchmessers und dem vorderen axialen Ende der Anlagefläche erstreckt, und eine zweite konvexe Kurve ausbildet, die sich zwischen dem Maximum des Außendurchmessers und dem hinteren axialen Ende der Anlagefläche erstreckt. Dabei kann die konvexe Kurve grundsätzlich in beliebiger Weise geformt sein. Ausführungsbeispiele sehen vor, dass die erste Kurve und/oder die zweite Kurve als Kreisbogen ausgebildet ist, dass die erste Kurve und/oder die zweite Kurve parabelförmig ausgebildet ist, oder dass die erste Kurve und/oder die zweite Kurve geradlinig ausgebildete Kurvenstücke aufweist. Im letzten Fall läuft beispielsweise die Anlagefläche des Planeten-Gleitlagerstifts zu seinen axialen Enden konisch zusammen. Auch kann vorgesehen sein, dass die erste Kurve und/oder die zweite Kurve aus mehreren unterschiedlich gekrümmten Kurvenstücken zusammengesetzt ist. Dabei kann weiter vorgesehen sein, dass eines oder mehrere dieser Kurvenstücke geradlinig/linear ausgebildet sind.

Das Maximum des Außendurchmessers des Planeten-Gleitlagerstifts kann durch eine Umfangslinie gebildet sein (die sich in Umfangsrichtung des Planeten-Gleitlagerstifts erstreckt). Im Längsschnitt des Planeten-Gleitlagerstifts bildet das Maximum somit einen Punkt. Dies bedeutet, dass die genannte erste Kurve und die genannte zweite Kurve stetig ineinander übergehen, somit die Anlagefläche durch eine einzige gekrümmte Kurve gebildet sein kann (die ins Ausführungsvarianten aus unterschiedlich gekrümmten Kurvenstücken zusammengesetzt sein kann). Dementsprechend kann in Ausgestaltungen der Erfindung vorgesehen sein, dass die Anlagefläche des Planeten-Gleitlagerstifts vollständig kreisförmig oder parabelförmig mit einem Maximum des Außendurchmessers in der axialen Mitte des Planeten-Gleitlagerstifts oder alternativ außerhalb der axialen Mitte des Planeten-Gleitlagerstifts ausgebildet ist.

Weiter kann vorgesehen sein, dass das Maximum des Außendurchmessers des Planeten-Gleitlagerstifts durch einen zylindrischen Bereich konstanten Au βendurchmessers gebildet ist, der sich über eine definierte axiale Länge erstreckt. Diese axiale Länge ist gemäß einer Ausführungsvariante derart bemessen, dass das Verhältnis der axialen Länge des zylindrischen Bereichs zur axialen Gesamtlänge der Anlagefläche zwischen 0 und 0,75 liegt.

Ein solcher zylindrischer Plateaubereich kann dabei mittig oder außermittig ausgebildet sein. An ihn können sich beispielsweise im Längsschnitt kreisförmige, parabelförmige oder gradlinige Flächen anschließen.

Weiter kann vorgesehen sein, dass das Verhältnis der halben Differenz zwischen dem maximalen Außendurchmesser und dem minimalen Außendurchmesser des Planeten-Gleitlagerstifts zum maximalen Außendurchmesser zwischen 0,00005 und 0,005 liegt. Genannte halben Differenz gibt dabei gerade die Balligkeit des Planeten-Gleitlagerstifts an. Sofern der Planeten-Gleitlagerstift unterschiedliche minimale Außendurchmesser an den beiden axialen Enden der Anlagefläche aufweist, gilt das genannte Verhältnis jeweils im Hinblick auf den maximalen Außendurchmesser und den minimalen Außendurchmesser an dem jeweils betrachteten axialen Ende.

Es kann vorgesehen sein, dass der Planeten-Gleitlagerstift in seiner axialen Mitte (d.h. mittig zwischen dem axial vorderen Ende und dem axial hinteren Ende der Anlagefläche) ein Maximum seines Außendurchmessers aufweist. Der Planeten-Gleitlagerstift ist spiegelsymmetrisch hinsichtlich seiner axialen Mitte ausgebildet. Dies ist jedoch nicht notwendigerweise der Fall. Alternativ kann vorgesehen sein, dass der Planeten-Gleitlagerstift außerhalb seiner axialen Mitte ein Maximum seines Außendurchmessers aufweist und dementsprechend asymmetrisch hinsichtlich seiner axialen Mitte ausgebildet ist.

Gemäß einer Ausgestaltung der Erfindung ist der Planeten-Gleitlagerstift als Rotationskörper ausgebildet, d. h. er ist rotationssymmetrisch bezüglich der Längsachse des Gleitlagerstifts ausgebildet. Dies ist jedoch nicht notwendigerweise der Fall. Alternativ kann vorgesehen sein, dass der Planeten-Gleitlagerstift eine ballig ausgebildete Anlagefläche lediglich über einen Umfangswinkel kleiner 360°, insbesondere im Bereich von ±60° um den nominell belasteten Bereich aufweist. Das ballige Profil des Planeten-Gleitlagerstifts erstreckt sich somit nicht über den gesamten Umfang des Planeten-Gleitlagerstifts, sondern in Umfangsrichtung nur über einen definierten Winkelbereich. Der beschriebene positive Einfluss auf das Gleitlager ist auch bei einer solchen Ausgestaltung gegeben. Zusätzlich wird der Ölverbrauch für die Schmierung reduziert, da eine vergrößerte Schmierfilmdicke an den axialen Enden nicht über den gesamten Umfang bereitgestellt wird.

Sofern der Planeten-Gleitlagerstift rotationssymmetrisch ausgebildet ist, ist der Außendurchmesser an einer betrachteten axialen Position für alle Punkte einer Umfangslinie der gleiche. Sofern der Planeten-Gleitlagerstift nicht rotationssymmetrisch ausgebildet ist, wird als Außendurchmesser einer betrachteten axialen Position im Sinne der vorliegenden Erfindung der größte Außendurchmesser betrachtet.

Der Planeten-Gleitlagerstift weist gemäß einer Ausgestaltung der Erfindung ein axial vorderes Ende und ein axial hinteres Ende auf, die axial beabstandet zu dem axial vorderen Ende und dem axial hinteren Ende der Anlagefläche sind, wobei der Planeten-Gleitlagerstift an seinem vorderen axialen Ende mit einer vorderen Trägerplatte und an seinem hinteren axialen Ende mit einer hinteren Trägerplatte verbunden ist. Der Planeten-Gleitlagerstift erstreckt sich somit an beiden Enden jenseits der Anlagefläche und ist dort jeweils mit einer Trägerplatte verbunden. Es ist also zu unterscheiden zwischen den axialen Enden der Anlagefläche und den axialen Enden des Planeten-Gleitlagerstifts.

Die vorliegende Offenbarung umfasst des Weiteren ein Getriebefan-Triebwerk, das eine Fanstufe, eine Fanwelle, über die die Fanstufe angetrieben wird, und eine Turbinenwelle umfasst. Bei der Turbinenwelle handelt es sich beispielsweise um eine Welle, die mit einer Niederdruckturbine oder einer Mitteldruckturbine des Triebwerks gekoppelt ist. Es ist vorgesehen, dass die Turbinenwelle und die Fanwelle über ein Planetengetriebe gemäß Anspruch 1 gekoppelt sind, wobei die Turbinenwelle die Sonnenwelle bildet, die Planeten-Gleitlagerstifte mit einem Drehmomentträger gekoppelt sind und der Drehmomentträger mit der Fanwelle gekoppelt ist.

Es wird darauf hingewiesen, dass die vorliegende Erfindung bezogen auf ein zylindrisches Koordinatensystem beschrieben ist, das die Koordinaten x, r und ϕ aufweist. Dabei gibt x die axiale Richtung, r die radiale Richtung und ϕ den Winkel in Umfangsrichtung an. Die axiale Richtung ist dabei durch die Drehachse des Planetengetriebes definiert, die identisch mit einer Maschinenachse eines Getriebefan-Triebwerks ist, in dem das Planetengetriebe angeordnet ist. Von der x-Achse ausgehend zeigt die radiale Richtung radial nach außen. Begriffe wie "vor", "hinter", "vordere" und "hintere" beziehen sich auf die axiale Richtung bzw. die Strömungsrichtung im Triebwerk, in dem das Planetengetriebe angeordnet ist. Begriffe wie "äußere" oder "innere" beziehen sich auf die radiale Richtung.

Die Erfindung wird nachfolgend unter Bezugnahme auf die Figuren der Zeichnung anhand mehrerer Ausführungsbeispiele näher erläutert. Es zeigen:
- Figur 1: eine vereinfachte schematische Schnittdarstellung eines Getriebefan-Triebwerks;
- Figur 2: eine Schnittdarstellung von Elementen eines Planetengetriebes, das zum Einsatz in einem Getriebefantriebwerk geeignet ist, wobei eine Sonnenwelle, ein Sonnenrad, ein Planetenrad, ein Planeten-Gleitlagerstift und ein Trägerstift eines Drehmomentträgers dargestellt sind, und wobei der Planeten-Gleitlagerstift an seiner Anlagefläche eine Balligkeit ausbildet;
- Figur 3: eine vergrößerte Darstellung des Planetenrads und des Planeten-Gleitlagerstifts der Figur 2;
- Figur 4: eine Darstellung von Elementen eines alternativen Planetengetriebes, bei dem anders als bei dem Planetengetriebe der Figuren 2 und 3 kein Trägerstift vorgesehen ist und stattdessen eine Drehmomentübertragung auf einen Drehmomentträger über eine fest mit den Planeten-Gleitlagerstiften verbundene Trägerplatte erfolgt;
- Figur 5: Elemente des Planetengetriebes der Figur 4 in einer teilweise geschnittenen Ansicht;
- Figur 6: eine teilweise geschnittene Darstellung eines Planeten-Gleitlagerstifts, der in einem Planetengetriebe gemäß den Figuren 4 und 5 angeordnet ist;
- Figur 7: den Planeten-Gleitlagerstift der Figur 6 in vergrößerter geschnittener Darstellung;
- Figur 8: eine Schnitterstellung eines weiteren Planeten-Gleitlagerstifts gemäß den Figuren 2 und 3;
- Figur 9: eine Schnitterstellung eines weiteren Ausführungsbeispiels eines mit einer Balligkeit versehenen Planeten-Gleitlagerstifts, wobei der Planeten-Gleitlagerstift eine kreisbogenförmige Anlagefläche bildet;
- Figur 10: eine Schnitterstellung eines weiteren Ausführungsbeispiels eines mit einer Balligkeit versehenen Planeten-Gleitlagerstifts, wobei der Planeten-Gleitlagerstift eine asymmetrisch ausgebildete Anlagefläche bildet;
- Figur 11: eine Schnitterstellung eines weiteren Ausführungsbeispiels eines mit einer Balligkeit versehenen Planeten-Gleitlagerstifts, wobei der Planeten-Gleitlagerstift symmetrisch ausgebildet ist und die Anlagefläche unterschiedlich geformte Bereiche aufweist;
- Figur 12: eine Schnitterstellung eines weiteren Ausführungsbeispiels eines mit einer Balligkeit versehenen Planeten-Gleitlagerstifts, wobei der Planeten-Gleitlagerstift asymmetrisch ausgebildet ist und die Anlagefläche unterschiedlich geformte Bereiche aufweist;
- Figur 13: eine weitere Darstellung des Planeten-Gleitlagerstifts der Figur 6 in vergrößerter geschnittener Darstellung;
- Figur 14: die Schmierfilmdicke eines Gleitlagers in Abhängigkeit von der axialen Position des Gleitlagers für einen Planeten-Gleitlagerstift mit ballig ausgebildeter Anlagefläche; und
- Figur 15: die Schmierfilmdicke eines Gleitlagers in Abhängigkeit von der axialen Position des Gleitlagers für einen zylindrisch geformten Planeten-Gleitlagerstift.

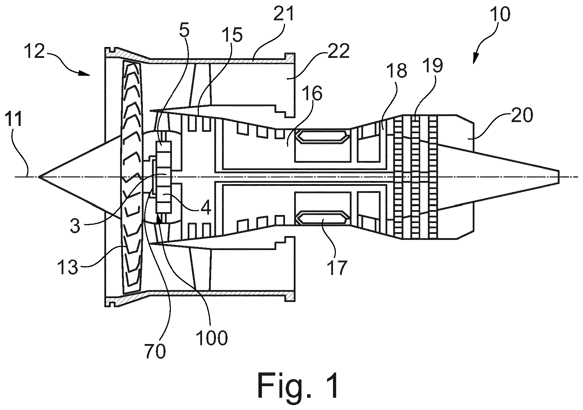

Die Figur 1 zeigt ein Getriebefan-Triebwerk 10 mit einer Drehachse 11, das für eine Verwendung in Flugzeugen vorgesehen ist. In der Richtung der axialen Durchströmung weist das Getriebefan-Triebwerk 10 hintereinander einen Lufteinlauf 12, eine Fanstufe 13 (grundsätzlich sind auch mehr als eine Fanstufe 13 möglich), ein Getriebe 100, einen Mitteldruckverdichter 15, einen Hochdruckverdichter 16, eine Verbrennungsvorrichtung 17, eine Hochdruckturbine 18, eine Mitteldruckturbine 19 und eine Düse 20 auf. Ein Fangehäuse 21 umgibt die Fanstufe 13 und definiert den Lufteinlauf 12.

Das Getriebefan-Triebwerk 10 arbeitet grundsätzlich in konventioneller Weise, wobei in den Lufteinlauf 12 eintretende Luft von der Fanstufe 13 beschleunigt wird. Dabei werden zwei Luftstrome erzeugt: Ein erster Strom tritt in den Mitteldruckverdichter 15 ein, ein zweiter Luftstrom fließt durch einen Nebenstromkanal 22, wobei der zweite Luftstrom den größten Anteil am Schub des Getriebefan-Triebwerks 10 liefert. Der Mitteldruckverdichter 15 verdichtet den eintretenden Luftstrom, bevor er in den Hochdruckverdichter 16 gelangt, in dem eine weitere Verdichtung erfolgt. Die verdichtete Luft, die aus dem Hochdruckverdichter 16 austritt, wird in die Verbrennungsvorrichtung 17 geführt, wo sie mit Brennstoff vermischt wird und die Mischung dann zur Verbrennung gebracht wird. Die heißen Verbrennungsgase werden in der Hochdruckturbine 18 und in der Mitteldruckturbine 19 entspannt, bevor sie durch die Düse 20 austreten und somit zusätzlichen Schub liefern.

Hinter dem Fanstufe 13 bildet das Getriebefan-Triebwerk 10 somit einen Nebenstromkanal 22 und einen Primärstromkanal aus. Der Primärstromkanal führt durch das Kerntriebwerk (Gasturbine), das den Mitteldruckverdichter 15, den Hochdruckverdichter 16, die Verbrennungsvorrichtung 17, die Hochdruckturbine 18 und die Mitteldruckturbine 19 umfasst. Der Nebenstromkanal 22 leitet im Betrieb des Getriebefan-Triebwerks 10 von der Fanstufe 13 angesaugte Luft am Kerntriebwerk vorbei.

Die Hochdruckturbine 18 und die Mitteldruckturbine 19 treiben über Wellenvorrichtungen jeweils den Hochdruckverdichter 16 und den Mitteldruckverdichter 15 an. Eine Mitteldruckwelle treibt die Fanstufe 13 über das Getriebe 100 an. Das Getriebe 100 ist dabei als Untersetzungsgetriebe ausgebildet, das die Drehzahl der Fanstufe 13 im Vergleich zum Mitteldruckverdichter 15 und zur Mitteldruckturbine 19 reduziert. Das Getriebe 100 ist in der dargestellten Ausführungsform ein Planetengetriebe mit einem statischen Hohlrad 5 und umlaufenden Planetenrädern 4, die im Hohlrad 5 umlaufen. Der Antrieb des Getriebes 100 erfolgt über ein Sonnenrad 3, das mit der Mitteldruckwelle gekoppelt ist. Der Abtrieb erfolgt in der dargestellten Ausführungsform über einen Drehmomentträger 70, der mit den Planetenrädern 4 gekoppelt ist.

Grundsätzlich sind auch andere Ausführungsformen des Getriebes 100 möglich, wobei z.B. das Hohlrad 5 beweglich ausgebildet sein kann, so dass der Abtrieb über das Hohlrad 5 erfolgt.

Die Ausgestaltung des Getriebefan-Triebwerks 10 gemäß der Figur 1 ist lediglich beispielhaft zu verstehen. Insbesondere die Anordnung der Wellen kann auch anders gewählt werden, wobei grundsätzlich Zwei- oder Dreiwellenanordnungen möglich sind. Beispielsweise kann alternativ eine Dreiwellenanordnung vorgesehen sein, die eine Niederdruckwelle, die die Niederdruckturbine mit dem Fan verbindet, eine Mitteldruckwelle, die die Mitteldruckturbine mit dem Mitteldruckverdichter verbindet, und eine Hochdruckwelle, die die Hochdruckturbine mit dem Hochdruckverdichter verbindet, umfasst. Dabei ist die Fanstufe 13 über ein Getriebe mit der Niederdruckwelle verbunden ist. Weiter können, wenn das Turbofantriebwerk keinen Mitteldruckverdichter und keine Mitteldruckturbine aufweist, nur eine Niederdruckwelle und eine Hochdruckwelle vorhanden sein, wobei wiederum die Fanstufe 13 über ein Getriebe mit der Niederdruckwelle verbunden ist.

Die beschriebenen Komponenten besitzen mit der Drehachse 11 eine gemeinsame Rotations- bzw. Maschinenachse. Die Drehachse 11 definiert eine axiale Richtung des Triebwerks 10. Eine radiale Richtung des Triebwerks 10 verläuft senkrecht zur axialen Richtung.

Im Kontext der vorliegenden Erfindung ist die Ausbildung des Planetengetriebes 100 von Bedeutung.

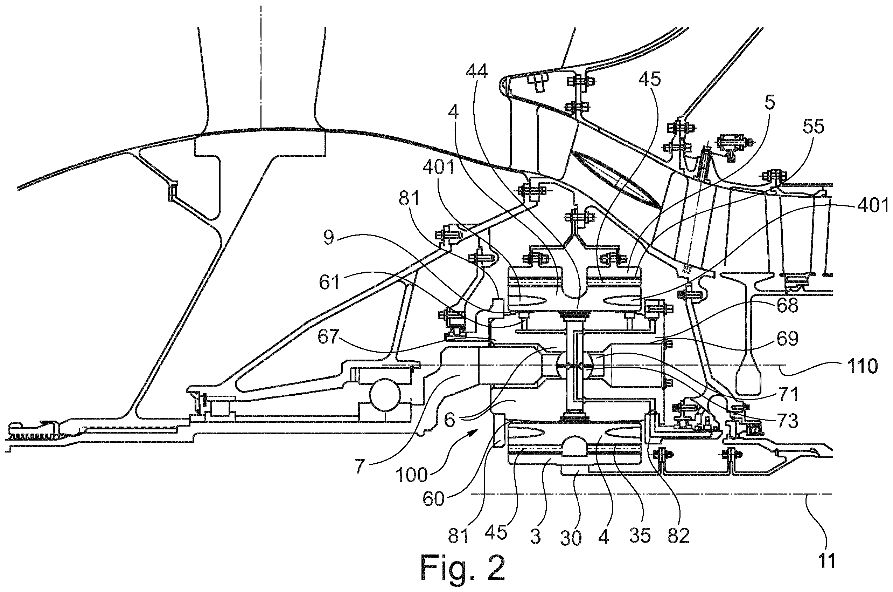

Die Figur 2 zeigt ein Ausführungsbeispiel eines Planetengetriebes 100 in einer Schnittdarstellung. Das Planetengetriebe 100 umfasst ein Sonnenrad 3, das von einer Sonnenwelle 30 angetrieben wird. Bei der Sonnenwelle 30 handelt sich beispielsweise um die Mitteldruckwelle der Figur 1. Das Sonnenrad 3 und die Sonnenwelle 30 drehen sich dabei um eine Drehachse 11, die eine axiale Richtung des Planetengetriebes 100 definiert.

Das Planetengetriebe 100 umfasst des Weiteren eine Mehrzahl von Planetenrädern 4, von denen in der Schnittdarstellung der Figur 2 eines dargestellt ist. Das Sonnenrad 3 treibt die Mehrzahl der Planetenräder 4 an, wobei eine Verzahnung 35 des Sonnenrad 3 mit einer Verzahnung 45 des Planetenrads 4 in Eingriff steht. Bei der Verzahnung 35, 45 handelt es sich beispielsweise um eine Doppelschrägverzahnung.

Die folgende Beschreibung eines Planetenrads 4 gilt für sämtliche Planetenräder, die von dem Sonnenrad 3 angetrieben werden. Das Planetenrad 4 ist hohlzylindrisch ausgebildet und bildet eine äußere Mantelfläche und eine innere Mantelfläche 44. Das Planetenrad 4 rotiert - angetrieben durch das Sonnenrad 3 - um eine Drehachse 110, die parallel zur Drehachse 11 verläuft. Die äußere Mantelfläche des Planetenrads 4 bildet eine Verzahnung 45 aus, die mit der Verzahnung 55 eines Hohlrads 5 in Eingriff steht. Die Verzahnungen 45, 55 können ebenfalls als Doppelschrägverzahnung ausgebildet sein. Das Hohlrad 5 ist feststehend, d. h. nichtrotierend angeordnet. Die Planetenräder 4 rotieren aufgrund ihrer Kopplung mit dem Sonnenrad 3 und wandern dabei entlang des Umfangs des Hohlrads 5. Die Rotation der Planetenräder 4 entlang des Umfangs des Hohlrads 5 und dabei um die Drehachse 110 ist langsamer als die Rotation der Sonnenwelle 3, wodurch eine Untersetzung bereitgestellt wird.

Das Planetenrad 4 weißt angrenzend an seine innere Mantelfläche 44 eine zentrierte axiale Öffnung auf. In die Öffnung eingebracht ist ein Planeten-Gleitlagerstift 6, wobei der Planeten-Gleitlagerstift 6 und das Planetenrad 4 an ihren einander zugewandten Flächen ein geschmiertes Gleitlager bilden. Zur Schmierung des Gleitlagers können sich radial erstreckende Schmierfilmöffnungen 61 im Planeten-Gleitlagerstift 6 ausgebildet sein, durch die von innen eingesprühtes oder in anderer Weise zugeführtes Schmieröl in einen Gleitlagerspalt 9 zwischen dem Planeten-Gleitlagerstift 6 und dem Planetenrad 4 zugeführt werden kann. Dabei wird darauf hingewiesen, dass im Planeten-Gleitlagerstift 6 auch davon abweichende oder zusätzliche Mittel zum Zuführen von Schmieröl zum Gleitlager ausgebildet sein können.

Im Betrieb weisen das Planetenrad 4 und der Planeten-Gleitlagerstift 6 nicht exakt die gleiche Achse auf, da das in hydrodynamischer Bauweise ausgeführte Gleitlager eine Exzentrizität im Bereich von Zehntelmillimetern mit sich bringt.

Der Planeten-Gleitlagerstift 6 weist eine außenseitige Anlagefläche 60 auf, die ballig ausgebildet ist. Dementsprechend nimmt der Außendurchmesser des Planeten-Gleitlagerstifts zu den axialen Enden der Anlagefläche 60 hin ab und weist dort ein Minimum auf.

Der Planeten-Gleitlagerstift 6 weist angrenzend an seine Innenfläche 69 ebenfalls eine axiale Öffnung bzw. Bohrung auf und ist dazu vorgesehen, in dieser einen Trägerstift 7 eines Drehmomentträgers aufzunehmen. Der Trägerstift 7 ist dabei in einem verjüngten Bereich 71 des Trägerstifts 7 in einem Gelenklager 73 innerhalb der Bohrung des Planeten-Gleitlagerstifts 6 gelagert. Das Gelenklager 73 erlaubt eine gewisse Schiefstellung des Trägerstiftes 7 gegenüber der Drehachse 110. Ein Trägerstift 7 ist in jedem der Planeten-Gleitlagerstifte 6 des Planetengetriebes 100 angeordnet. Die Trägerstifte 7 sind an ihren aus der Öffnung des Planeten-Gleitlagerstifts 6 herausragenden Enden fest miteinander verbunden und bilden dabei einen Drehmomentträger entsprechend dem Drehmomentträger 70 der Figur 1. Der Drehmomentträger bildet ein Abtriebselement des Planetengetriebe ist mit der Fanwelle bzw. allgemein mit einer Abtriebswelle gekoppelt.

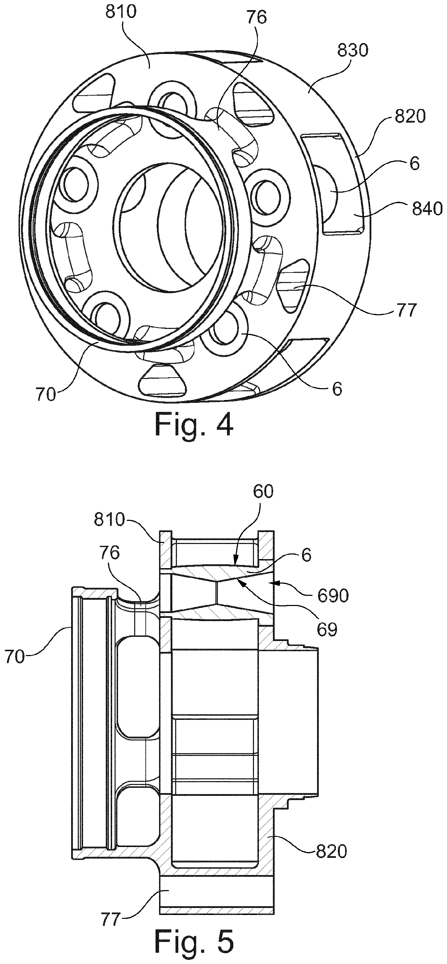

Die genaue Form des Trägerstiftes 7 und dessen dargestellte Lagerung an der Innenfläche des Planeten-Gleitlagerstifts 6 sind dabei nur beispielhaft zu verstehen. Auch wird darauf hingewiesen, dass eine Kopplung des Planeten-Gleitlagerstifts 6 mit einem Drehmomentträger auch in anderer Weise erfolgen kann, wie anhand der Figuren 4 und 5 beispielhaft aufgezeigt wird.

Die Figur 2 zeigt des Weiteren eine vordere Trägerplatte 81 und eine hintere Trägerplatte 82. Der Planeten-Gleitlagerstift 6 ist mit der vorderen Trägerplatte 81 und mit der hinteren Trägerplatte 82 befestigt, beispielsweise mit diesen verschraubt oder verschweißt. Dazu ist vorgesehen, dass der Planeten-Gleitlagerstift 6 ein axial vorderes Ende 67 und ein axial hinteres Ende 68 aufweist, die jeweils axial gegenüber den Enden der Anlagefläche 60 hervorstehen, wobei der Planeten-Gleitlagerstift 6 an den Enden 67, 68 mit den Trägerplatten 81, 82 befestigt ist.

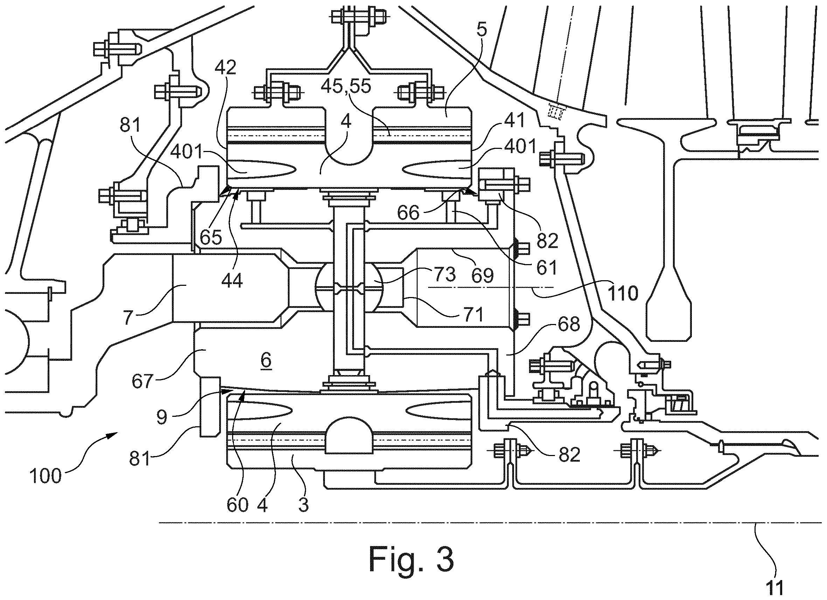

Der Aufbau des Planetenrads 4 und des Planeten-Gleitlagerstifts 6 wird nachfolgend weitergehend in Bezug auf die Figur 3 erläutert, die einen Ausschnitt aus der Figur 2 darstellt.

Gemäß der Figur 3 ist zu erkennen, dass das Planetenrad 4 an seinen beiden Stirnseiten 41, 42 jeweils eine Aussparung 401 ausbildet, die sich von der Stirnseite 41, 42 im Wesentlichen in axialer Richtung (bzw. ausgehend von der Stirnseite 41 entgegen der axialen Richtung) in das Innere des Planetenrads 4 erstreckt. Hierdurch werden die Masse des Planetenrads 4 und die Steifigkeit des Planetenrads 4 zu seinen Stirnseiten 41, 42 hin reduziert.

Das Gleitlager zwischen dem Planeten-Gleitlagerstift 6 und dem Planetenrad 4 wird durch die zylindrische innere Mantelfläche 44 des Planetenrads 4 und die mit einer Balligkeit versehene Anlagefläche 60 des Planeten-Gleitlagerstifts 6 gebildet. Der im Bereich des Gleitlagers ausgebildete Gleitlagerspalt 9 nimmt dabei aufgrund der Krümmung der Anlagefläche 60 zum axial vorderen Ende und zum axial hinteren Ende des Gleitlagers in seiner radialen Dicke zu. Bei hohen Drehmomenten und Zentrifugalkräften können sich die aneinander angrenzenden Flächen 44, 60 des Gleitlagers jedoch an dessen Enden im Wesentlichen parallel ausrichten. Hierzu tragen auch die in dem Planetenrad 4 ausgebildeten Aussparungen 401 bei, die diesem an seinen Enden eine erhöhte Flexibilität geben.

Die Anlagefläche 60 weist ein axial vorderes Ende 65 und ein axial hinteres Ende 66 auf.

Die Figuren 4 und 5 zeigen Elemente eines weiteren Planetengetriebes. Das Planetengetriebe der Figuren 4 und 5 ist grundsätzlich wie das Planetengetriebe der Figuren 2 und 3 aufgebaut. Es unterscheidet sich lediglich in der Art, in der das Drehmoment abgenommen und auf einen Drehmomentträger (entsprechend dem Drehmomentträger 70 der Figur 1) übertragen wird. Die Figur 4 zeigt nur solche Elemente des Planetengetriebes, die diese unterschiedliche Art der Drehmomentübertragung betreffen. Die übrigen, nicht dargestellten Elemente entsprechen der Ausgestaltung der Figuren 2 und 3. Insbesondere umfasst das Getriebe wie in Bezug auf die Figuren 2 und 3 erläutert ein Sonnenrad, eine Sonnenwelle, eine Mehrzahl von Planetenrädern, die von dem Sonnenrad angetrieben werden, und ein Hohlrad.

In den Figuren 4 und 5 ist zu erkennen, dass die Planeten-Gleitlagerstifte 6 fest mit einer vorderen Trägerplatte 810 und einer hinteren Trägerplatte 820 verbunden sind. Sie sind mit den Trägerplatten 810, 820 beispielsweise fest verschraubt oder verschweißt. Der Planeten-Gleitlagerstift 6 weist ebenso wie im Ausführungsbeispiel der Figuren 2 und 3 jeweils eine ballige außenseitige Anlagefläche 60 auf. An seiner Innenfläche 69 bildet der Planeten-Gleitlagerstift 6 eine Bohrung 690 aus, deren Innendurchmesser zur axialen Mitte des Planeten-Gleitlagerstifts hin abnimmt. Im dargestellten Ausführungsbeispiel ist die Bohrung 690 doppelt konisch ausgebildet. Hierauf wird in Bezug auf die Figuren 17 und 18 näher eingegangen werden.

Anders als beim Ausführungsbeispiel der Figuren 2 und 3 nimmt die axiale Bohrung 690 des Planeten-Gleitlagerstifts 6 keinen Trägerstift eines Drehmomentträgers auf, sondern ist leer. Ein Trägerstift ist nicht vorhanden. Die Übertragung eines Drehmoments auf einen Drehmomentträger 70 erfolgt über Verbindungsstege 76, die den Drehmomentträger 70 fest mit der vorderen Trägerplatte 810 verbinden. Der Drehmomentträger 70 ist im dargestellten Ausführungsbeispiel als Ring ausgebildet. Dies ist jedoch nur beispielhaft zu verstehen. Der Drehmomentträger 70 ist in nicht dargestellter Weise mit der Fanwelle gekoppelt.

Beim Ausführungsbeispiel der Figuren 4 und 5 sind der Drehmomentträger 70, die vordere Trägerplatte 810 und die hintere Trägerplatte 820 einteilig ausgebildet, während sie beim Ausführungsbeispiel der Figuren 2 und 3 dreiteilig ausgebildet sind. Durch die Zusammenführung des Drehmomentträgers und der Trägerplatten zu einem Teil kann der Trägerstift 7 der Figuren 2 und 3 wegfallen. Die Abnahme des Drehmoments erfolgt nicht mehr mittig in der Bohrung des Planeten-Gleitlagerstifts 6, sondern von der vorderen Trägerplatte 810. Dementsprechend wird beim Ausführungsbeispiel der Figuren 4 und 5 auch kein Gelenklager (entsprechend dem Gelenklager 73 der Figuren 2 und 3) benötigt.

Zum einteiligen Aufbau von vorderer Trägerplatte 810, hinterer Trägerplatte 820 und Drehmomentträger 70 wird weiter angemerkt, dass die vordere Trägerplatte 810 und die hintere Trägerplatte 820 durch am Umfang ausgebildete Wandflächen 830 miteinander verbunden sind, zwischen denen sich jeweils im wesentlichen rechteckförmige Aussparungen 840 befinden, die der Aufnahme jeweils eines Planetenrads dienen. Weiter weist die durch die beiden Trägerplatten 810, 820 und den Drehmomentträger 70 gebildete strukturelle Einheit axiale Bohrungen 77 auf, die der Ankopplung weiterer Teile (nicht dargestellt) für eine Drehmomentübertragung dienen können.

Die dargestellte Anzahl von fünf Planeten-Gleitlagerstiften 6, fünf Verbindungsstegen 76 und fünf axialen Bohrungen 77 ist nur beispielhaft zu verstehen.

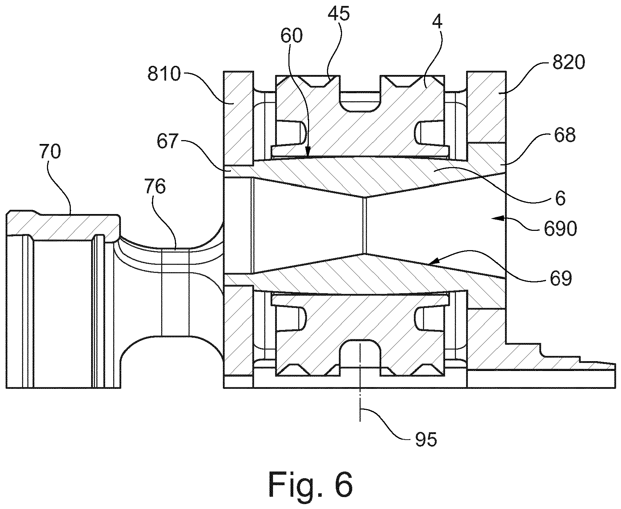

Die Figur 6 zeigt ein Ausführungsbeispiel eines Planeten-Gleitlagerstifts 6, der ein Gleitlager mit einem Planetenrad 4 mit einer Außenverzahnung 45 ausbildet. Der Planeten-Gleitlagerstift 6 ist fest mit einer Struktur verbunden, die entsprechend dem Ausführungsbeispiel der Figuren 4 und 5 aus einer vorderen Trägerplatte 810, einer hinteren Trägerplatte 820 und einem Drehmomentträger 70 besteht. Dazu umfasst der Planeten-Gleitlagerstift 6 eine erste axiale Verlängerung 67, die in der vorderen Trägerplatte 810 befestigt ist und eine zweite axiale Verlängerung 68, die in der hinteren Trägerplatte 820 befestigt ist.

Der Drehmomentträger 70 ist über Verbindungsstege 76 fest mit der vorderen Trägerplatte 810 verbunden. Insofern wird auf die Beschreibung der Figuren 4 und 5 verwiesen.

Der Planeten-Gleitlagerstift 6 besitzt eine ballig ausgebildete Anlagefläche 60. Alternativ ist die äußere Anlagefläche 60 zylindrisch ausgebildet. Der Planeten-Gleitlagerstift 6 weist des Weiteren eine Innenfläche 69 auf, die eine axiale Bohrung 690 begrenzt, die eine von einer zylindrischen Form abweichende Form aufweist. So ist die Bohrung 690 doppelt konisch ausgebildet, wobei der Innendurchmesser der Bohrung 690 in der axialen Mitte 95 des Planeten-Gleitlagerstifts 6 ein Minimum und zu den beiden axialen Enden hin ein Maximum aufweist.

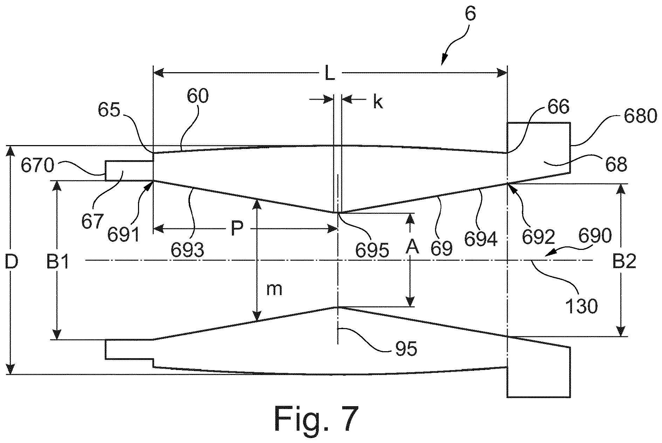

Die Figur 7 zeigt den Planeten-Gleitlagerstift 6 der Figur 6 in vergrößerte Darstellung, wobei die für die Ausbildung des Planeten-Gleitlagerstifts 6 relevanten Parameter dargestellt sind. In der Schnittdarstellung der Figur 7 ist dabei eine Längsachse 130 des Planeten-Gleitlagerstifts 6 erkennbar. Diese ist im Wesentlichen identisch mit der Drehachse 110 des Planetenrads 110, vgl. Figur 2, wobei jedoch die hydrodynamische Bauweise des Gleitlagers eine kleine Exzentrizität z.B. im Bereich von Zehntelmillimetern mit sich bringt.

Der Planeten-Gleitlagerstift 6 bildet eine außenseitige Anlagefläche 60 aus, die ein axial vorderes Ende 65 und ein axial hinteres Ende 66 aufweist. Zwischen diesen beiden Enden 65, 66 bildet die Anlagefläche 60 eine Balligkeit in dem Sinne aus, dass ihr Außendurchmesser zu den axialen Enden 65, 66 hin abnimmt und an den axialen Enden 65, 66 ein Minimum erreicht. Wie bereits erwähnt, kann die Anlagefläche 60 alternativ auch zylindrisch ausgebildet sein. Die Anlagefläche 60 weist einen maximalen Außendurchmesser D auf.

Innenseitig bildet der Planeten-Gleitlagerstift 6 die Innenfläche 69 aus, die die axiale Bohrung bzw. Öffnung 690 radial außen begrenzt und eine innere Mantelfläche des Planeten-Gleitlagerstifts 6 darstellt. Die axiale Bohrung 690 weist dabei einen ersten maximalen Innendurchmesser B1 an dem axialen Ende 691 der Innenfläche 69 und einen zweiten maximalen Innendurchmesser B2 an dem axialen Ende 692 der Innenfläche 69 auf. Der axiale Abstand zwischen diesen beiden axialen Enden wird mit L bezeichnet (und ist gleich dem Abstand zwischen den axialen Enden 65, 66 der äußeren Anlagefläche 60). Zwischen den beiden axialen Enden 691, 692 weist die axiale Bohrung 690 einen minimalen Innendurchmesser A auf. Dabei kann vorgesehen sein, dass B1 gleich B2 oder alternativ dass B1 ungleich B2 ist: B1 = B2 oder B1 ≠ B2.

Die Differenz zwischen dem minimalen Innendurchmesser A und dem Innendurchmesser m an einer betrachteten axialen Position des Planeten-Gleitlagerstifts nimmt zu den axialen Enden 691, 692 stetig zu.

Der minimale Innendurchmesser A ist im Ausführungsbeispiel der Figur 7 an der axialen Mitte 95 des Planeten-Gleitlagerstifts 6 und in einem zylindrischen Bereich 695 der axialen Länge k um diese axiale Mitte 95 herum realisiert. Das Minimum des Innendurchmessers A ist somit in einem zylindrischen Bereich 695 konstanten Innendurchmessers realisiert, der sich symmetrisch zur axialen Mitte 95 über eine definierte axiale Länge k erstreckt. Dies ist allerdings nicht notwendigerweise der Fall. Alternativ wird das Minimum des Innendurchmessers A lediglich entlang einer Umfangslinie bzw. im in der Figur 7 dargestellten Längsschnitt an einem Punkt erreicht.

Der axiale Abstand zwischen dem axial vorderen Ende 691 der Innenfläche 69 zum Minimum des Innendurchmessers A oder, wenn das Minimum in einem zylindrischen Bereich ausgebildet ist, zur Mitte dieses zylindrischen Bereichs, wird in der Figur 7 als P bezeichnet. Sofern, wie in der Figur 7 dargestellt, das Minimum des Innendurchmessers A sich in der axialen Mitte 95 befindet, gibt P auch den Abstand zwischen den axialen Enden 691, 692 der Innenfläche 69 und der axialen Mitte 95 sowie den Abstand zwischen den axialen Enden 65, 66 der Außenfläche und der axialen Mitte 95 an.

Die Innenfläche 69 des Planeten-Gleitlagerstifts 6 bildet im Längsschnitt eine erste Kurve 693 aus, die sich zwischen dem zylindrischen Bereich 695 und dem vorderen axialen Ende 691 erstreckt, sowie eine zweite Kurve 694 aus, die sich zwischen dem zylindrischen Bereich 695 und dem hinteren axialen Ende 692 erstreckt. Die Form der Kurven 693, 694 kann grundsätzlich beliebig sein. Die hier dargestellte gradlinige Ausbildung ist lediglich beispielhaft zu verstehen. Alternativ können die Kurven beispielsweise kreisförmig oder parabelförmig sein.

Bei der dargestellten geradlinigen Ausbildung der Kurven 693, 694 ergibt sich eine doppelt konische Ausgestaltung der Bohrung 690 dahingehend, dass sich die Bohrung 690 von den axialen Enden (an den axialen Positionen 691, 692) zur axialen Mitte 95 des Planeten-Gleitlagerstifts 6 hin konisch verjüngt. Hierdurch wird eine symmetrisch zur axialen Mitte 95 und gleichzeitig rotationssymmetrische Ausbildung der axialen Bohrung 690 bereitgestellt, die dazu führt, dass der Planeten-Gleitlagerstift 6 in seinem mittigen Bereich eine größere Wanddicke aufweist als an den axialen Enden der Innenfläche 69.

Der Planeten-Gleitlagerstift 6 weist axiale Verlängerungen bzw. Enden 67, 68 auf, die jeweils eine vordere axialen Stirnseite 670 des Planeten-Gleitlagerstifts 6 und eine hintere axiale Stirnseite 680 des Planeten-Gleitlagerstifts bilden. Wie in Bezug auf die Figuren 2 bis 5 erläutert, ist der Planeten-Gleitlagerstift 6 an diesen Enden 67, 68 jeweils an einer Trägerplatte befestigt.

Es wird darauf hingewiesen, dass die Außenfläche 60 und die Innenfläche 69 die gleiche axiale Länge L besitzen, wobei die Punkte 65 und 691 sowie die Punkte 66 und 692 die gleiche axiale Position aufweisen. Die Außenfläche 60 und die Innenfläche 69 erstrecken sich in dem axialen Bereich, der der Bereitstellung eines Gleitlagers mit einem Planetenrad dient. Die sich axial daran anschließenden Verlängerungen 67, 68 dienen lediglich der Befestigung des Planeten-Gleitlagerstifts 6 in Trägerplatten und spielen für die hier betrachteten Formgebungen und Abmessungen keine Rolle.

Der Planeten-Gleitlagerstift 6 realisiert in Ausgestaltungen der Offenbarung Erfindung bestimmte Verhältnisse der wie oben definierten Parameter A, B1, B2, k, P und L.

So gilt für das Verhältnis der Länge P zur axialen Gesamtlänge L: 0 ≤ P/L ≤ 1. Dies bedeutet, dass das Minimum des Innendurchmessers A grundsätzlich an beliebiger axialer Position des Planeten-Gleitlagerstifts 6 ausgebildet sein kann. Insbesondere sind auch asymmetrische Anordnungen möglich. Auch umfasst die Offenbarung

Ausführungsvarianten, bei denen das Minimum des Innendurchmessers A an dem einen axialen Ende 691 der Anlagefläche (P=0) oder an dem anderen axialen Ende 692 der Anlagefläche (P=L) ausgebildet ist. In anderen Ausführungsvarianten befindet sich das Minimum des Innendurchmessers A stets zwischen den beiden axialen Enden 691, 692 der Anlagefläche.

Es gilt für das Verhältnis der axialen Länge des zylindrischen Bereichs k zur axialen Gesamtlänge L: 0 ≤ k/L ≤ 0,75. Je größer dieses Verhältnis, desto größer die axiale Erstreckung des zylindrischen Bereichs 695. Wenn das Verhältnis k/L gleich Null ist, ist f gleich Null, d. h. ein zylindrischer Bereich konstanten Außendurchmessers ist dann nicht vorhanden.

Es gilt für das Verhältnis zwischen dem minimalen Innendurchmesser A und dem maximalen Innendurchmessern B1, B2: 0 ≤ A/B1 ≤ 0,99 und 0 ≤ A/B2 ≤ 0,99. Je näher dieses Verhältnis an 1 liegt, desto geringer die Verjüngung der axialen Bohrung 690.

Der in der Figur 7 dargestellte Planeten-Gleitlagerstift 6 ist rotationssymmetrisch ausgebildet.

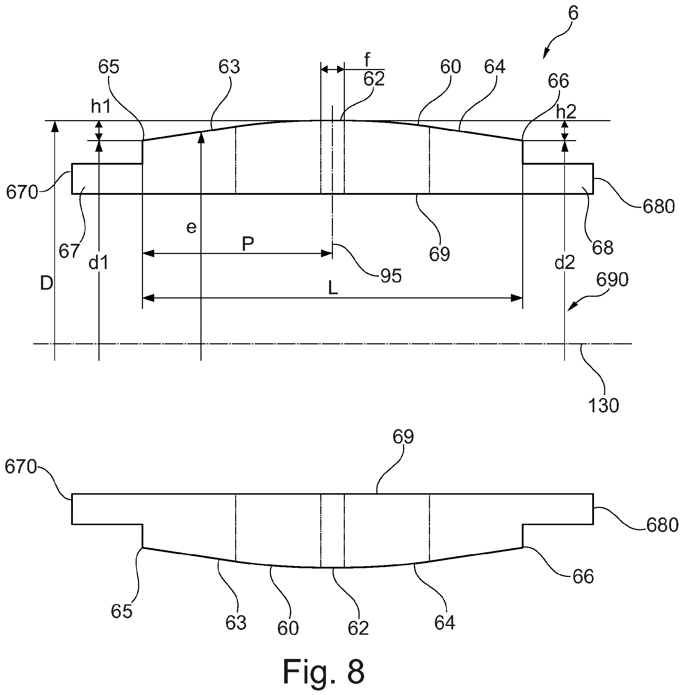

Die Figur 8 erläutert beispielhaft die Ausgestaltung und die relevanten Parameter eines Planeten-Gleitlagerstifts, der eine Balligkeit ausbildet und entsprechend einem Planeten-Gleitlagerstift 6 gemäß den Figuren 2 bis 5 ausgebildet ist. In der Schnittdarstellung der Figur 8 ist dabei eine Längsachse 130 des Planeten-Gleitlagerstifts 6 erkennbar. Diese ist im Wesentlichen identisch mit der Drehachse 110 des Planetenrads 110, vgl. Figur 2, wobei jedoch die hydrodynamische Bauweise des Gleitlagers eine kleine Exzentrizität z.B. im Bereich von Zehntelmillimetern mit sich bringt. Der Planeten-Gleitlagerstift 6 bildet angrenzend an eine innere Mantelfläche bzw. Innenfläche 69 des Planeten-Gleitlagerstifts 6 eine axiale Öffnung 690 aus, die dazu dienen kann, einen Trägerstift eines Drehmomentträgers aufzunehmen, beispielsweise den Trägerstift 7 der Figur 2.

Die axiale Öffnung 690 kann dabei entsprechend den Figuren 6 und 7 ausgebildet sein und dementsprechend einen sich in axialer Richtung verändernden Durchmesser aufweisen.

Der Planeten-Gleitlagerstift 6 bildet eine außenseitige Anlagefläche 60 aus, die ein axial vorderes Ende 65 und ein axial hinteres Ende 66 aufweist. Der axiale Abstand zwischen diesen beiden Enden wird mit L bezeichnet. Zwischen diesen beiden Enden 65, 66 bildet die Anlagefläche 60 eine Balligkeit in dem Sinne aus, dass ihr Außendurchmesser zu den axialen Enden 65, 66 hin abnimmt und an den axialen Enden 65, 66 ein Minimum erreicht.

Der Planeten-Gleitlagerstift 6 weist dabei einen minimalen Außendurchmesser d1 an seinem axialen Ende 65, einen minimalen Außendurchmesser d2 an seinem axialen Ende 66 und einen maximalen Außendurchmesser D zwischen seinen axialen Enden 65, 66 auf. Dabei definiert die halbe Differenz h1 zwischen dem maximalen Außendurchmesser D und dem minimalen Außendurchmesser d1 die Balligkeit der Anlagefläche zwischen der axialen Position des maximalen Außendurchmessers und dem einen Ende 65. Weiter definiert die halbe Differenz h2 zwischen dem maximalen Außendurchmesser D und dem minimalen Außendurchmesser d2 die Balligkeit der Anlagefläche zwischen der axialen Position des maximalen Außendurchmessers und dem anderen Ende 66.

Es kann vorgesehen sein, dass d1 gleich d2 oder alternativ dass d1 ungleich d2 ist. Dementsprechend ist h1 gleich h2 oder es ist h1 ungleich h2.

Die Differenz zwischen dem maximalen Außendurchmesser D und dem Außendurchmesser e an einer betrachteten axialen Position des Planeten-Gleitlagerstifts nimmt zu den axialen Enden 65, 66 des Planeten-Gleitlagerstifts 6 stetig zu.

Der maximale Außendurchmesser D ist im Ausführungsbeispiel der Figur 8 an der axialen Mitte 95 des Planeten-Gleitlagerstifts 6 und in einem zylindrischen Bereich 62 der axialen Länge f um diese axiale Mitte 95 herum realisiert. Das Maximum des Außendurchmessers D ist somit in einem zylindrischen Bereich 62 konstanten Außendurchmessers realisiert, der sich symmetrisch zur axialen Mitte 95 über eine definierte axiale Länge f erstreckt. Dies ist allerdings nicht notwendigerweise der Fall. Alternativ wird das Maximum des Außendurchmessers D lediglich entlang einer Umfangslinie bzw. im in der Figur 8 dargestellten Längsschnitt an einem Scheitelpunkt erreicht.

Der axiale Abstand zwischen dem axial vorderen Ende 65 der Anlagefläche 60 zum Maximum des Außendurchmesser D oder, wenn das Maximum in einem zylindrischen Bereich ausgebildet ist, zur Mitte dieses zylindrischen Bereichs, wird in der Figur 8 als P bezeichnet. In der Figur 8 liegt P dabei aufgrund der symmetrischen Ausgestaltung der Anlagefläche 60 in der axialen Mitte 95 der Anlagefläche.

Die Anlagefläche 60 des Planeten-Gleitlagerstifts 6 bildet im Längsschnitt eine erste konvexe Kurve 63 aus, die sich zwischen dem zylindrischen Bereich 62 und dem vorderen axialen Ende 65 erstreckt, sowie eine zweite konvexe Kurve 64 aus, die sich zwischen dem zylindrischen Bereich 62 und dem hinteren axialen Ende 66 erstreckt. Die Form der Kurven 63, 64 kann grundsätzlich beliebig sein. Beispielsweise sind die Kurven kreisförmig, parabelförmig oder gradlinig ausgebildet.

Der Planeten-Gleitlagerstift 6 weist axiale Verlängerungen bzw. Enden 67, 68 auf, die jeweils eine vordere axialen Stirnseite 670 des Planeten-Gleitlagerstifts 6 und eine hintere axiale Stirnseite 680 des Planeten-Gleitlagerstifts bilden. Wie in Bezug auf die Figuren 2 bis 5 erläutert, ist der Planeten-Gleitlagerstift 6 an diesen Enden 67, 68 jeweils an einer Trägerplatte befestigt.

Der Planeten-Gleitlagerstift 6 realisiert in Ausgestaltungen der Offenbarung bestimmte Verhältnisse der wie oben definierten Parameter h, P, L und D.

So gilt für das Verhältnis der Länge P zur axialen Gesamtlänge L: 0 ≤ P/L ≤ 1. Dies bedeutet, dass das Maximum des Außendurchmessers D grundsätzlich an beliebiger axialer Position des Planeten-Gleitlagerstifts 6 ausgebildet sein kann. Insbesondere sind auch asymmetrische Anordnungen möglich. Auch umfasst die Offenbarung Z

Ausführungsvarianten, bei denen das Maximum des Außendurchmessers D an dem einen axialen Ende 65 der Anlagefläche (P=0) oder an dem anderen axialen Ende 66 der Anlagefläche (P=L) ausgebildet ist. In anderen Ausführungsvarianten befindet sich das Maximum des Außendurchmessers D stets zwischen den beiden axialen Enden 65, 66 der Anlagefläche.

Es gilt für das Verhältnis der axialen Länge des zylindrischen Bereichs f zur axialen Gesamtlänge L: 0 ≤ f/L ≤ 0,75. Je größer dieses Verhältnis, desto größer die axiale Erstreckung des zylindrischen Bereichs. Wenn das Verhältnis f/L gleich Null ist, ist f gleich Null, d. h. ein zylindrischer Bereich konstanten Außendurchmessers ist dann nicht vorhanden.

Es gilt für das Verhältnis der halben Differenz h1, h2 zwischen dem maximalen Außendurchmesser D und dem minimalen Außendurchmesser d1, d2 zum maximalen Außendurchmesser D: 0,00005 ≤ h1/D ≤ 0,005 sowie 0,00005 ≤ h2/D ≤ 0,005. Diese Verhältnisse bestimmen die Balligkeit der Anlagefläche 60. Dabei kann h1 gleich h2 sein. Der in der Figur 8 dargestellte Planeten-Gleitlagerstift 6 ist rotationssymmetrisch ausgebildet.

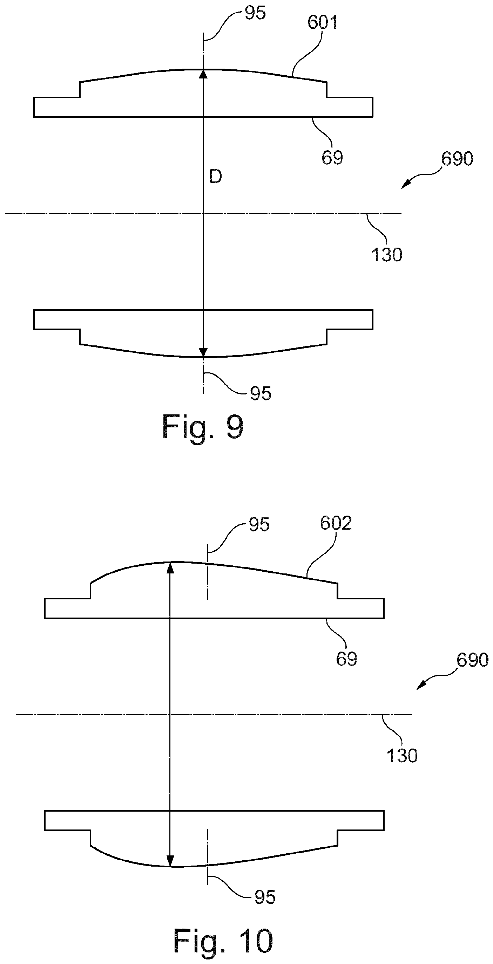

Die Figuren 9-12 zeigen jeweils in einer Schnittdarstellung verschiedene Ausgestaltungen eines Planeten-Gleitlagerstifts 6 entsprechend dem Planeten-Gleitlagerstift der Figur 8, wobei erkennbar ist, dass der Planeten-Gleitlagerstift 6 angrenzend an die Innenfläche 69 eine Öffnung 690 ausbildet, die entsprechend der Beschreibung der Figuren 2 und 3 beispielsweise der Aufnahme eines Planeten-Gleitlagerstifts dient.

Die in Bezug auf die Figur 8 erläuterten Parameter f, h, P und L sind dabei in den Figuren 9-12 unterschiedlich gewählt, wie im Folgenden ausgeführt wird.

Beim Ausführungsbeispiel der Figur 9 ist die Anlagefläche 601 ohne einen zylindrischen Bereich ausgebildet, d. h. der Parameter f ist gleich Null. Dementsprechend ist der maximale Außendurchmesser D in der axialen Mitte 95 des Planeten-Gleitlagerstifts 6 realisiert. Die beiden konvexen Kurven 63, 64 der Figur 8 bilden eine gemeinsame Kurve, die beispielsweise durch einen Kreisbogen gebildet ist.

Der Planeten-Gleitlagerstift der Figur 9 ist dabei spiegelsymmetrisch bezüglich seiner axialen Mitte 95 ausgebildet.

Beim Ausführungsbeispiel der Figur 10 ist das Maximum des Außendurchmessers D außerhalb der axialen Mitte 95 realisiert, so dass eine Asymmetrie in der Formgebung der Anlagefläche 602 realisiert ist. Ein zylindrischer Bereich ist wiederum nicht vorgesehen. In der betrachteten Schnittdarstellung bilden die beiden konvexen Kurven 63, 64 der Figur 8 eine gemeinsame Kurve 602. Diese wird beispielsweise durch einen parabelförmigen Bogen gebildet.

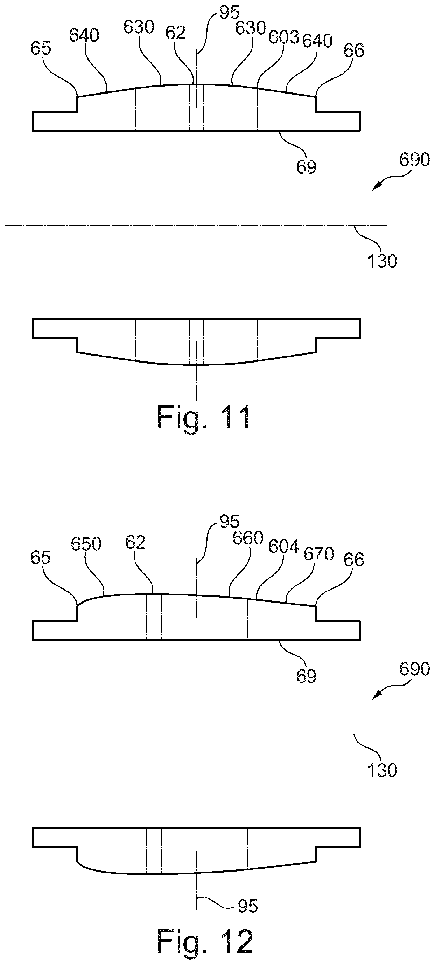

Die Figur 11 betrachtet ein Ausführungsbeispiel, bei dem die Anlagefläche 603 einen zylindrischen Bereich 62 ausbildet, in dem der Außendurchmesser D maximal ist. Dieser Bereich 62 ist mittig ausgebildet, so dass der Planeten-Gleitlagerstift 6 spiegelsymmetrisch bezüglich seiner axialen Mitte 95 ist.

Zu beiden Seiten angrenzend an den zylindrischen Bereich 62 bildet die Anlagefläche 603 Bereiche aus, die kreisförmig gebogen sind, wobei sich an diese Bereiche konisch geformte Bereiche anschließen, die sich bis zu den axialen Enden 65, 66 der Anlagefläche 603 erstrecken. In der Schnittdarstellung der Figur 9 bildet die Anlagefläche dem kreisförmig gebogenen Bereich einen Kreisbogen 630 und dem konisch geformten Bereich einen gerade Linie 640 aus, wobei letzterer bis zu den axialen Enden 65, 66 der Anlagefläche 603 verläuft.

Die Figur 12 zeigt ein Ausführungsbeispiel, bei dem das Maximum des Außendurchmessers D außerhalb der axialen Mitte 95 realisiert, so dass eine Asymmetrie in der Formgebung der Anlagefläche 604 realisiert ist. Die Anlagefläche 604 bildet dabei einen zylindrischen Bereich 62 aus, in dem der Außendurchmesser D maximal ist. Dieser Bereich 62 ist jedoch versetzt zu der axialen Mitte 95 des Planeten-Gleitlagerstifts 6 ausgebildet. Von dem zylindrischen Bereich 62 erstreckt ein parabelförmig gebogener Bereich bis zum axial vorderen Ende 65 der Anlagefläche 604, der in der Figur 12 eine parabelförmig Linie 650 bildet. Zwischen dem zylindrischen Bereich 62 und dem axial hinteren Ende 66 der Anlagefläche 604 sind zwei unterschiedlich geformte Bereiche ausgebildet, zunächst ein kreisförmig gebogener Bereich und daran anschließend und sich bis zum axialen Ende 66 erstreckender, konisch verjüngender Bereich, die in der Schnittdarstellung der Figur 12 einen Kreisbogen 660 und eine gerade Linie 670 bilden.

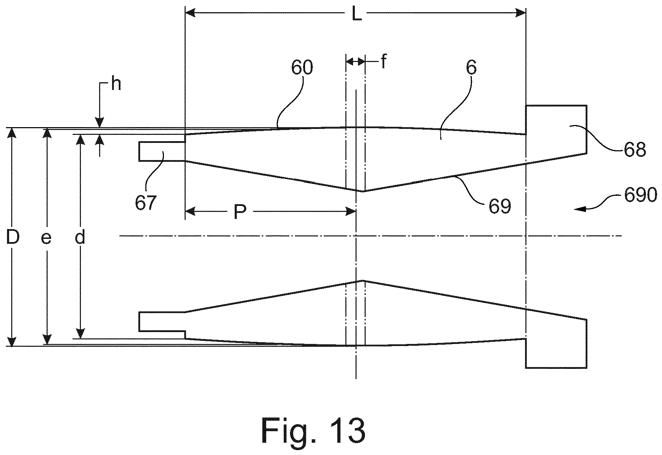

Die Figur 13 ist eine weitere vergrößerte Darstellung des Planeten-Gleitlagerstifts 6 der Figur 6, wobei entsprechend der Darstellung der Figur 8 die dort angegebenen, für die Ausbildung des Planeten-Gleitlagerstifts 6 relevanten Parameter D, d, e, f, h, P und L ebenfalls dargestellt sind. Hinsichtlich der Definition dieser Parameter wird auf die Beschreibung der Figur 8 verwiesen. Anders als in der Figur 8 ist lediglich angenommen, dass der minimalen Außendurchmesser des Planeten-Gleitlagerstifts 6 an den beiden axialen Enden identisch ist, so dass dieser Parameter mit d angegeben ist (ohne die in der Figur 8 vorgenommene Differenzierung zwischen d1 und d2 und dementsprechend ebenfalls ohne die Differenzierung zwischen h1 und h2).

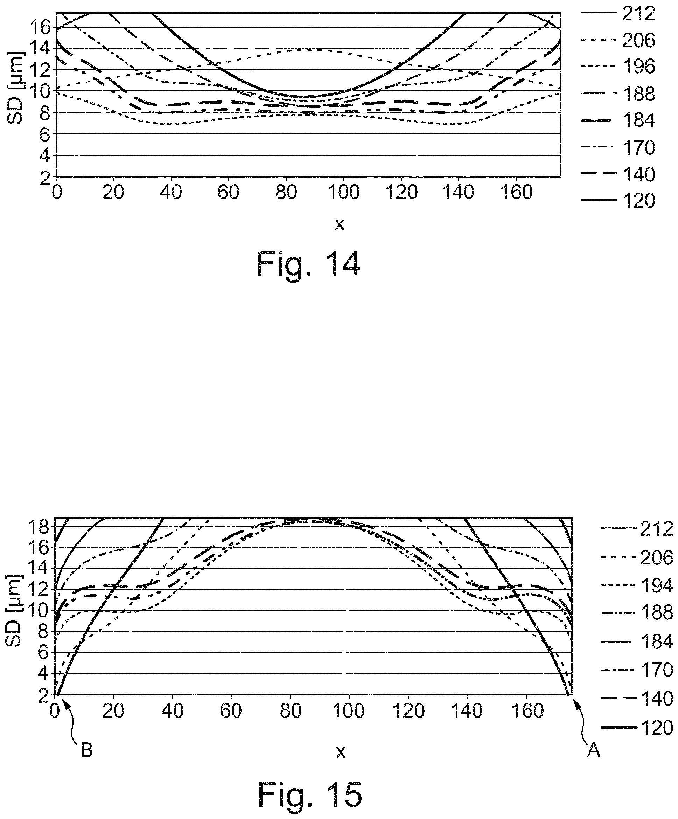

Die mit einer Balligkeit des Planeten-Gleitlagerstifts verbundenen Vorteile sind in den Figuren 14 und 15 illustriert, die jeweils die Schmierfilmdicke des Gleitlagers in Abhängigkeit von der axialen Position des Gleitlagers darstellen. Die Figur 15 zeigt dabei die Verhältnisse an einem Planeten-Gleitlagerstift, der eine rein zylindrisch geformte, nicht mit einer Balligkeit versehene Außenfläche aufweist, bei 80 % Last. Es ist zu erkennen, dass die Schmierfilmdicke zu den axialen Enden hin stark abnimmt (vergleiche Pfeile A, B), was zu einem erhöhten Schmierfilmdruck und der Gefahr eines Metall-Metall-Kontaktes zwischen dem Planeten-Gleitlagerstift und dem Planetenrad führt.

Die Figur 14 zeigt die Schmierfilmdicke des Gleitlagers in Abhängigkeit von der axialen Position des Gleitlagers für einen Planeten-Gleitlagerstift, der eine mit einer Balligkeit versehene Außenfläche aufweist, bei 100 % Last. Eine ausreichende Schmierfilmdicke ist auch an den axialen Enden gegeben.

Die vorliegende Erfindung beschränkt sich in ihrer Ausgestaltung nicht auf die vorstehend beschriebenen Ausführungsbeispiele. Insbesondere sind die beschriebenen konkreten Formgebungen des Planeten-Gleitlagerstifts nur beispielhaft zu verstehen.

Bereiche definiert sind, so umfassen diese sämtliche Werte innerhalb dieser Bereiche sowie sämtliche Teilbereiche, die in einen Bereich fallen.

## Patentansprüche

1. Planetengetriebe (100), das aufweist:
- ein Sonnenrad (3), das um eine Drehachse (11) des Planetengetriebes (100) rotiert und von einer Sonnenwelle (30) angetrieben wird, wobei die Drehachse (11) eine axiale Richtung des Planetengetriebes (100) definiert,
- eine Mehrzahl von Planetenrädern (4), die von dem Sonnenrad (3) angetrieben werden,
- ein Hohlrad (5), mit dem die Mehrzahl von Planetenrädern (4) in Eingriff steht, und
- eine Mehrzahl von Planeten-Gleitlagerstiften (6), die jeweils eine außenseitige Anlagefläche (60) aufweisen, die ein axial vorderes Ende (65) und ein axial hinteres Ende (66) aufweist,
- wobei jeweils ein Planeten-Gleitlagerstift (6) in einem Planetenrad (4) angeordnet ist und der Planeten-Gleitlagerstift (6) und das Planetenrad (4) ein geschmiertes Gleitlager bilden, und wobei
- der Planeten-Gleitlagerstift (6) mit einer axialen Bohrung (690) versehen ist und eine Innenfläche (69) aufweist, die ein axial vorderes Ende (691) und ein axial hinteres Ende (692) aufweist, wobei
- der Innendurchmesser (m) der axialen Bohrung (690) des Planeten-Gleitlagerstifts (6) zwischen dem axial vorderen Ende (691) und dem axial hinteren Ende (692) der Innenfläche (69) variiert und dabei an mindestens einem axialen Ende (691, 692) ein Maximum aufweist, und
- die Planeten-Gleitlagerstifte (6) an ihrer Anlagefläche (60) jeweils eine Balligkeit in dem Sinne ausbilden, dass ihr Außendurchmesser (e) von einem maximalen Außendurchmesser (D) zu mindestens einem axialen Ende (65, 66) der Anlagefläche (60) hin abnimmt und an dem axialen Ende (65, 66) ein Minimum aufweist, **dadurch gekennzeichnet,**
**dass** der Planeten-Gleitlagerstift (6) ein axial vorderes Ende (67) und ein axial hinteres Ende (68) aufweist, die axial beabstandet zu dem axial vorderen Ende (691) und dem axial hinteren Ende (692) der Innenfläche (60) sind, wobei der Planeten-Gleitlagerstift (6) an seinem vorderen axialen Ende (67) an einer vorderen Trägerplatte (81, 810) und an seinem hinteren axialen Ende (68) an einer hinteren Trägerplatte (82, 820) befestigt oder einstückig mit diesen ausgebildet ist.

2. Planetengetriebe nach Anspruch 1, **dadurch gekennzeichnet, dass** der Planeten-Gleitlagerstift (6) maximale Innendurchmesser (B1, B2) an den beiden axialen Enden (691, 692) der Innenfläche (69) und einen minimalen Innendurchmesser (A) zwischen den axialen Enden (691, 692) aufweist, wobei die maximalen Innendurchmesser (B1, B2) an den beiden axialen Enden (65, 66) identisch sind.

3. Planetengetriebe nach Anspruch 1, **dadurch gekennzeichnet, dass** der Planeten-Gleitlagerstift (6) maximale Innendurchmesser (B1, B2) an den beiden axialen Enden (691, 692) der Innenfläche (69) und einen minimalen Innendurchmesser (A) zwischen den axialen Enden (691, 692) aufweist, wobei die maximalen Innendurchmesser (B1, B2) an den beiden axialen Enden (65, 66) unterschiedlich sind.

4. Planetengetriebe nach einem der vorangehenden Ansprüche, **dadurch gekennzeichnet, dass** der Innendurchmesser (m) der axialen Bohrung (690) des Planeten-Gleitlagerstifts (6) zu mindestens einem axialen Ende (691, 692) der Innenfläche (69) kontinuierlich zunimmt.

5. Planetengetriebe nach einem der vorangehenden Ansprüche, **dadurch gekennzeichnet, dass** die Innenfläche (69) des Planeten-Gleitlagerstifts (6) im Längsschnitt eine erste Kurve (693) ausbildet, die sich zwischen dem Minimum und dem vorderen axialen Ende (691) erstreckt, und eine zweite Kurve (694) ausbildet, die sich zwischen dem Minimum und dem hinteren axialen Ende (692) erstreckt.

6. Planetengetriebe nach Anspruch 5, **dadurch gekennzeichnet, dass** die erste Kurve (693) und/oder die zweite Kurve (694) geradlinig ausgebildet ist.

7. Planetengetriebe nach einem der vorangehenden Ansprüche, **dadurch gekennzeichnet, dass** die axiale Bohrung (690) als doppelt konische Bohrung ausgebildet ist, die sich jeweils von den axialen Enden (691, 692) zur axialen Mitte der Bohrung (690) hin konisch verjüngt.

8. Planetengetriebe nach einem der vorangehenden Ansprüche, **dadurch gekennzeichnet, dass** das Minimum des Innendurchmessers (A) des Planeten-Gleitlagerstifts (6) durch eine Umfangslinie gebildet ist.

9. Planetengetriebe nach einem der Ansprüche 1 bis 7, **dadurch gekennzeichnet, dass** das Minimum des Innendurchmessers (A) des Planeten-Gleitlagerstifts (6) durch einen zylindrischen Bereich (695) konstanten Innendurchmessers gebildet ist, der sich über eine definierte axiale Länge (k) erstreckt.

10. Planetengetriebe nach einem der vorangehenden Ansprüche, **dadurch gekennzeichnet, dass** der Planeten-Gleitlagerstift (6) in seiner axialen Mitte (95) ein Minimum seines Innendurchmessers (A) aufweist.

11. Planetengetriebe nach einem der Ansprüche 1 bis 9, **dadurch gekennzeichnet, dass** der Planeten-Gleitlagerstift (6) außerhalb seiner axialen Mitte (95) ein Minimum seines Innendurchmessers (A) aufweist.

12. Planetengetriebe nach einem der vorangehenden Ansprüche, **dadurch gekennzeichnet, dass** der Planeten-Gleitlagerstift (6) als Rotationskörper ausgebildet ist.

13. Planetengetriebe nach einem der vorangehenden Ansprüche, **dadurch gekennzeichnet, dass** der Planeten-Gleitlagerstift (6) minimale Außendurchmesser (d1, d2) an den axialen Enden (65, 66) der Anlagefläche (60) und den maximalen Außendurchmesser (D) zwischen den axialen Enden (65, 66) aufweist.

14. Planetengetriebe nach einem der vorangehenden Ansprüche, **dadurch gekennzeichnet, dass** der Planeten-Gleitlagerstift (6) fest mit der vorderen Trägerplatte (81, 810) und mit der hinteren Trägerplatte (82, 820) verbunden ist, wobei die vordere Trägerplatte (81, 810) zur Drehmomentübertragung mit einem Drehmomentträger (70) gekoppelt ist.

15. Planetengetriebe nach einem der Ansprüche 1 bis 13, **dadurch gekennzeichnet, dass** der Planeten-Gleitlagerstift (6) dazu ausgebildet sind, in seiner axialen Bohrung (690) einen Trägerstift (7) eines Drehmomentträgers (70) aufzunehmen.

## Claims

1. Planetary gearbox (100) which comprises:
- a sun gear (3) which rotates about a rotational axis (11) of the planetary gearbox (100) and is driven by a sun shaft (30), the rotational axis (11) defining an axial direction of the planetary gearbox (100),
- a plurality of planetary gears (4) which are driven by the sun gear (3),
- an internal gear (5), with which the plurality of planetary gears (4) are in engagement, and
- a plurality of planetary plain bearing pins (6) which in each case have an outer-side bearing face (60) which has an axially front end (65) and an axially rear end (66),
- in each case one planetary plain bearing pin (6) being arranged in a planetary gear (4), and the planetary plain bearing pin (6) and the planetary gear (4) forming a lubricated plain bearing, and
- the planetary plain bearing pin (6) being provided with an axial bore (690) and having an inner face (69) which has an axially front end (691) and an axially rear end (692),
- the internal diameter (m) of the axial bore (690) of the planetary plain bearing pin (6) varying between the axially front end (691) and the axially rear end (692) of the inner face (69) and having a maximum here at at least one axial end (691, 692), and
- the planetary plain bearing pins (6) in each case configuring a convexity on their bearing face (60), in the sense that their external diameter (e) decreases from a maximum external diameter (D) towards at least one axial end (65, 66) of the bearing face (60) and has a minimum at the axial end (65, 66),
**characterized**
**in that** the planetary plain bearing pin (6) has an axially front end (67) and an axially rear end (68) which are spaced apart axially from the axially front end (691) and the axially rear end (692) of the inner face (60), the planetary plain bearing pin (6) being fastened at its front axial end (67) to a front carrier plate (81, 810) and at its rear axial end (68) to a rear carrier plate (82, 820) or being configured in one piece with the said carrier plates.

2. Planetary gearbox according to Claim 1, **characterized in that** the planetary plain bearing pin (6) has maximum internal diameters (B1, B2) at the two axial ends (691, 692) of the inner face (69) and a minimum internal diameter (A) between the axial ends (691, 692), the maximum internal diameters (B1, B2) at the two axial ends (65, 66) being identical.

3. Planetary gearbox according to Claim 1, **characterized in that** the planetary plain bearing pin (6) has maximum internal diameters (B1, B2) at the two axial ends (691, 692) of the inner face (69) and a minimum internal diameter (A) between the axial ends (691, 692), the maximum internal diameters (B1, B2) at the two axial ends (65, 66) being different.

4. Planetary gearbox according to one of the preceding claims, **characterized in that** the internal diameter (m) of the axial bore (690) of the planetary plain bearing pin (6) increases continuously towards at least one axial end (691, 692) of the inner face (69).

5. Planetary gearbox according to one of the preceding claims, **characterized in that** the inner face (69) of the planetary plain bearing pin (6) configures, in longitudinal section, a first curve (693) which extends between the minimum and the front axial end (691), and configures a second curve (694) which extends between the minimum and the rear axial end (692).

6. Planetary gearbox according to Claim 5, **characterized in that** the first curve (693) and/or the second curve (694) are/is of rectilinear configuration.

7. Planetary gearbox according to one of the preceding claims, **characterized in that** the axial bore (690) is configured as a double conical bore which tapers conically in each case from the axial ends (691, 692) towards the axial centre of the bore (690).

8. Planetary gearbox according to one of the preceding claims, **characterized in that** the minimum of the internal diameter (A) of the planetary plain bearing pin (6) is formed by way of a perimeter line.

9. Planetary gearbox according to one of Claims 1 to 7, **characterized in that** the minimum of the internal diameter (A) of the planetary plain bearing pin (6) is formed by way of a cylindrical region (695) of constant internal diameter, which region (695) extends over a defined axial length (k).

10. Planetary gearbox according to one of the preceding claims, **characterized in that** the planetary plain bearing pin (6) has a minimum of its internal diameter (A) in its axial centre (95).

11. Planetary gearbox according to one of Claims 1 to 9, **characterized in that** the planetary plain bearing pin (6) has a minimum of its internal diameter (A) outside its axial centre (95).

12. Planetary gearbox according to one of the preceding claims, **characterized in that** the planetary plain bearing pin (6) is configured as a rotational body.

13. Planetary gearbox according to one of the preceding claims, **characterized in that** the planetary plain bearing pin (6) has minimum external diameters (d1, d2) at the axial ends (65, 66) of the bearing face (60) and the maximum external diameter (D) between the axial ends (65, 66).

14. Planetary gearbox according to one of the preceding claims, **characterized in that** the planetary plain bearing pin (6) is connected fixedly to the front carrier plate (81, 810) and to the rear carrier plate (82, 820), the front carrier plate (81, 810) being coupled to a torque support (70) for the transmission of torque.

15. Planetary gearbox according to one of Claims 1 to 13, **characterized in that** the planetary plain bearing pin (6) is configured to receive a support pin (7) of a torque support (70) in its axial bore (690).

## Revendications

1. Train épicycloïdal (100), qui comprend :
- une roue planétaire (3), qui tourne autour d'un axe de rotation (11) du train épicycloïdal (100) et est entraînée par un arbre planétaire (30), l'axe de rotation (11) définissant une direction axiale du train épicycloïdal (100),
- une pluralité de roues satellites (4), qui sont entraînées par la roue planétaire (3),
- une couronne (5), avec laquelle la pluralité de roues satellites (4) s'engrène, et
- une pluralité de broches à paliers lisses de satellites (6), qui comprennent respectivement une surface d'appui extérieure (60), qui comprend une extrémité axialement avant (65) et une extrémité axialement arrière (66),
- une broche à palier lisse de satellite (6) étant disposée respectivement dans une roue satellite (4) et la broche à palier lisse de satellite (6) et la roue satellite (4) formant un palier lisse lubrifié, et
- la broche à palier lisse de satellite (6) étant dotée d'un alésage axiale (690) et comprenant une surface intérieure (69) qui comprend une extrémité axialement avant (691) et une extrémité axialement arrière (692),
- le diamètre intérieur (m) de l'alésage axial (690) de la broche à palier lisse de satellite (6) variant entre l'extrémité axialement avant (691) et l'extrémité axialement arrière (692) de la surface intérieure (69) et présentant en l'occurrence un maximum à au moins une extrémité axiale (691, 692), et
- les broches à paliers lisses de satellites (6) formant, au niveau de leur surface d'appui (60), respectivement un bombement au sens que leur diamètre extérieur (e) diminue à partir d'un diamètre extérieur maximal (D) vers au moins une extrémité axiale (65, 66) de la surface d'appui (60) et présente un minimum à l'extrémité axiale (65, 66),
**caractérisé en ce que**
la broche à palier lisse de satellite (6) comprend une extrémité axialement avant (67) et une extrémité axialement arrière (68), qui sont espacées axialement de l'extrémité axialement avant (691) et de l'extrémité axialement arrière (692) de la surface intérieure (60), la broche à palier lisse de satellite (6) étant fixée à une plaque de support avant (81, 810) à son extrémité axiale avant (67) et à une plaque de support arrière (82, 820) à son extrémité axiale arrière (68) ou étant formée d'une seule pièce avec celle-ci.

2. Train épicycloïdal selon la revendication 1, **caractérisé en ce que** la broche à palier lisse de satellite (6) présente des diamètres intérieurs maximaux (B1, B2) aux deux extrémités axiales (691, 692) de la surface intérieure (69) et un diamètre intérieur minimal (A) entre les extrémités axiales (691, 692), les diamètres intérieurs maximaux (B1, B2) étant identiques aux deux extrémités axiales (65, 66).

3. Train épicycloïdal selon la revendication 1, **caractérisé en ce que** la broche à palier lisse de satellite (6) présente des diamètres intérieurs maximaux (B1, B2) aux deux extrémités axiales (691, 692) de la surface intérieure (69) et un diamètre intérieur minimal (A) entre les extrémités axiales (691, 692), les diamètres intérieurs maximaux (B1, B2) étant différents aux deux extrémités axiales (65, 66).

4. Train épicycloïdal selon l'une des revendications précédentes, **caractérisé en ce que** le diamètre intérieur (m) de l'alésage axial (690) de la broche à palier lisse de satellite (6) augmente de manière continue jusqu'à au moins une extrémité axiale (691, 692) de la surface intérieure (69).

5. Train épicycloïdal selon l'une des revendications précédentes, **caractérisé en ce que** la surface intérieure (69) de la broche à palier lisse de satellite (6) forme une première courbe (693) en coupe longitudinale, laquelle courbe s'étend entre le minimum et l'extrémité axiale avant (691), et forme une deuxième courbe (694) qui s'étend entre le minimum et l'extrémité axiale arrière (692).

6. Train épicycloïdal selon la revendication 5, **caractérisé en ce que** la première courbe (693) et/ou la deuxième courbe (694) sont formées de manière rectiligne.

7. Train épicycloïdal selon l'une des revendications précédentes, **caractérisé en ce que** l'alésage axial (690) est formé comme alésage doublement conique qui se rétrécit de manière conique respectivement à partir des extrémités axiales (691, 692) vers le centre axial de l'alésage (690).

8. Train épicycloïdal selon l'une des revendications précédentes, **caractérisé en ce que** le minimum du diamètre intérieur (A) de la broche à palier lisse de satellite (6) est formé par une ligne périphérique.

9. Train épicycloïdal selon l'une des revendications 1 à 7, **caractérisé en ce que** le minimum du diamètre intérieur (A) de la broche à palier lisse de satellite (6) est formé par une région cylindrique (695) de diamètre intérieur constant qui s'étend sur une longueur axiale définie (k).

10. Train épicycloïdal selon l'une des revendications précédentes, **caractérisé en ce que** la broche à palier lisse de satellite (6) présente un minimum de son diamètre intérieur (A) dans son centre axial (95).

11. Train épicycloïdal selon l'une des revendications 1 à 9, **caractérisé en ce que** la broche à palier lisse de satellite (6) présente un minimum de son diamètre intérieur (A) en dehors de son centre axial (95).

12. Train épicycloïdal selon l'une des revendications précédentes, **caractérisé en ce que** la broche à palier lisse de satellite (6) est formée comme un corps de rotation.

13. Train épicycloïdal selon l'une des revendications précédentes, **caractérisé en ce que** la broche à palier lisse de satellite (6) présente des diamètres extérieurs minimaux (d1, d2) aux extrémités axiales (65, 66) de la surface d'appui (60) et le diamètre extérieur maximal (D) entre les extrémités axiales (65, 66).

14. Train épicycloïdal selon l'une des revendications précédentes, **caractérisé en ce que** la broche à palier lisse de satellite (6) est reliée fixement à la plaque de support avant (81, 810) et à la plaque de support arrière (82, 820), la plaque de support avant (81, 810) étant accouplée à un support de couple (70) pour la transmission de couple.

15. Train épicycloïdal selon l'une des revendications 1 à 13, **caractérisé en ce que** la broche à palier lisse de satellite (6) est formée pour recevoir, dans son alésage axial (690), une broche de support (7) d'un support de couple (70).
